(19) Europäisches Patentamt

European Patent Office

Office européen des brevets

(11) **EP 1 150 794 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.7: **B23D 15/14**

(21) Anmeldenummer: 00906317.3

(22) Anmeldetag: **10.02.2000**

(86) Internationale Anmeldenummer:
**PCT/EP00/01092**

(87) Internationale Veröffentlichungsnummer:
**WO 00/051770 (08.09.2000 Gazette 2000/36)**

(54) **BLECHSCHERE FÜR GROSSE SCHNITTLÄNGEN**

SHEET-METAL SHEARING MACHINE FOR GREAT LENGTHS OF CUT

CISAILLE A TOLES POUR GRANDES LONGUEURS DE COUPE

(84) Benannte Vertragsstaaten:
**AT BE CH CY DE DK ES FI FR GB GR IE IT LI LU MC NL PT SE**

(30) Priorität: **10.02.1999 DE 19905475**

(43) Veröffentlichungstag der Anmeldung:
**07.11.2001 Patentblatt 2001/45**

(73) Patentinhaber: **HYDEA s.r.l.**
**20142 Milano (IT)**

(72) Erfinder:
• **ZANOLINI, Luciano**
**I-20142 Milano (IT)**

• **SCHULZE, Eckehart**
**D-71287 Weissach (DE)**

(74) Vertreter: **Lutz, Johannes Dieter, Dr. et al**
**Patentanwälte Wolf & Lutz**
**Hauptmannsreute 93**
**70193 Stuttgart (DE)**

(56) Entgegenhaltungen:
**CH-A- 509 124**     **DE-A- 3 911 660**
**GB-A- 728 256**     **GB-A- 1 312 851**
**US-A- 4 679 473**

**Beschreibung**

Die Erfindung betrifft eine Blechschere für große Schnittlängen mit einem gegenüber einem an einem Scherenbett feststehend angeordneten Untermesser geführt auf- und abbewegbaren Obermesser, zu dessen Schneid- und Rückzugsantrieb zwei als Differentialzylinder ausgebildete, doppelt wirkende hydraulisch in Reihe geschaltete lineare Hydrozylinder vorgesehen sind, und mit den weiteren, im Oberbegriff des Patentanspruchs 1 genannten, gattungsbestimmenden Merkmalen.

Blechscheren dieser Art sind allgemein bekannt und werden z.B. zum Abschneiden von Blechtafeln von einer im wesentlichen horizontal von einem Coil abgezogenen Blechbahn eingesetzt, von der die Tafeln mit ihrem Transport in die Weiterverarbeitung geeigneten Abmessungen abgeschnitten werden sollen. Hierbei ist es, um einen rationalen Betrieb der gesamten Schneidanlage zu ermöglichen, erforderlich, daß die Blechschere mit einer möglichst raschen Folge periodischer Schneidzyklen betrieben werden kann. Zur diesbezüglichen Ansteuerung der beiden Antriebs-Hydrozylinder in deren alternativen Vorschub- und Rückzugs-Bewegungsrichtungen ist ein mittels eines elektrisch ansteuerbaren Pilotventils druckgesteuertes Hauptsteuerventil vorgesehen, das in seinen alternativen Funktionsstellungen die für die jeweils angesteuerte Bewegungsrichtung erforderliche Strömungspfad-Kombination freigibt. Um die Blechbahn im Schneidvorgang sicher am Scherenbett fixieren zu können, sind als einfach wirkende Linearzylinder ausgebildete Niederhalter vorgesehen, die über die Schnittlänge verteilt im Bereich des feststehenden Untermessers über dessen Länge verteilt oberhalb des Scherenbetts angeordnet sind und, die Blechbahn an diesem sicher fixierend angelegt sein müssen, bevor das Obermesser die Blechbahn durchtrennt. Zur Druckversorgung der Antriebs-Hydrozylinder sowie der Niederhalter ist eine während des Betriebes der Blechschere ständig aktivierte Konstantpumpe vorgesehen, deren Ausgangsdruck durch ein Druckbegrenzungsventil auf einen einstellbaren Maximalwert von z.B. 250bar begrenzt ist.

Eine mögliche Art der Betriebssteuerung der bekannten Blechschere ist die folgende:

Nachdem der der Schneidbearbeitung zu unterwerfende Blechstreifen der Blechschere zugestellt ist, werden zunächst die Niederhalter angelegt. Danach werden die Antriebs-Hydrozylinder mittels des druckgesteuerten, elektrisch vorgesteuerten Hauptsteuerventils zur Ausführung des Vorschub- und Schneidhubes des Obermessers angesteuert. Nachdem die Blechbahn durchtrennt ist und das Obermesser eine z.B. durch einen Endschalter erkannte "untere" Endstellung erreicht hat, wird das Hauptsteuerventil in eine Sperrstellung gesteuert, in der die Antriebshydrozylinder des Obermessers gleichsam hydraulisch blockiert sind. Hiernach werden, wiederum elektrisch gesteuert oder vorgesteuert die Antriebsdruckräume der Niederhalter drukkentlastet, deren Kolben durch die Wirkung von Rückstellfedern der Niederhalter in ihre Grundstellungen angehoben werden, in der die Niederhalter vom Blechstreifen abgehoben sind. Hiernach oder noch während die Niederhalter sich nach oben bewegen, die abgeschnittene Blechtafel jedoch schon freigegeben ist, wird das Hauptsteuerventil in seine dem aufwärts gerichteten Rückzugsbetrieb des Obermessers zugeordnete Funktionsstellung geschaltet und, sobald die obere Endstellung des Obermessers erreicht ist, in der die Zustellung des nächsten Blechsteifenabschnittes zur Blechschere erfolgt, wobei zur Erkennung dieser OT-Stellung ein Endschalter vorgesehen ist, in seine Sperrstellung umgeschaltet, in der die Antriebshydrozylinder des Obermessers wieder hydraulisch blockiert werden. Diese mit der Stillsetzung der Hydraulikantriebe verknüpfte Funktionsstellung des Hauptsteuerventils bleibt aufrechterhalten, bis sichergestellt ist, daß sich die Blechbahn in der für den nächsten Schneidzyklus geeigneten Position befindet, der sodann durch elektrische Ansteuerung des Pilotventils eingeleitet wird.

Die bekannte Blechschere ist aufgrund ihres geschilderten Aufbaus und der dadurch bedingten Art der Bewegungssteuerung mit zumindest den folgenden Nachteilen behaftet:

Da die Niederhalter angelegt sein müssen, bevor das Obermesser der Blechschere zur Ausführung des Schneid-Hubes angesteuert werden darf, wird, gleichsam am Beginn eines Schneidzyklus, eine relativ große Zeitspanne dafür verbraucht, die Niederhalter anzulegen, deren Drucköbedarf durch die Konstantpumpe gedeckt werden muß. Dies führt zu einem Beitrag zur Zykluszeit, der einem erheblichen Anteil der Gesamt-Zykluszeit entsprechen kann.

Nachteilig ist weiter, daß die auf das Obermesser bei dessen Stillsetzung im unteren und im oberen Totpunkt seines Hubes wirkenden hohen Verzögerungen, die durch die jeweilige hydraulische Blockierung der Antriebshydrozylinder beim Umschalten des Hauptsteuerventils in dessen Sperrstellung auftreten, zu einer erheblichen Geräuschentwicklung führen.

Aufgabe der Erfindung ist es daher, eine Blechschere der eingangs genannten Art dahingehend zu verbessern, daß sie einen Betrieb mit signifikant reduzierten Schneid-Zykluszeiten bei gleichwohl verminderter Geräuschentwicklung ermöglicht.

Diese Aufgabe wird, dem Grundgedanken der Erfindung nach, durch die kennzeichnenden Merkmale des Patentanspruchs 1 und in weiteren Ausgestaltungen der Blechschere durch die Merkmale der Unteransprüche gelöst.

Hierdurch erzielte Vorteile der erfindungsgemäßen Blechschere sind zumindest die folgenden:

Durch die in der oberen Endstellung des Obermessers, der die Kopierstellung des Hauptsteuerventils entspricht, erfolgende Aufladung des Druckspeichers, die unmittelbar mit dem Erreichen der oberen Endstellung einsetzt, und Nutzung der vom Speicher aufgenommenen Drucköl-Menge zum Anlegen der Niederhalter wird zum einen die Förderleistung der Pumpe für den Speicher-Ladebetrieb genutzt und zum anderen dadurch, daß die Niederhalter aus dem Druckspeicher sehr rasch mit Drucköl versorgt werden können, der Beitrag des Anlegens der Niederhalter zur Zykluszeit vernachlässigbar niedrig gehalten, so daß erhebliche Verkürzungen der Zykluszeiten erreichbar sind. Da beidseits der Kopierstellung innerhalb der Kolben-Hubbereiche $\Delta h_1$ und $\Delta h_2$, zumindest innerhalb sich beidseits der Mittelstellung des Hauptsteuerventilkolbens erstreckender Teilbereiche der verschiedenen Funktionsstellungen des Hauptsteuerventilkolbens zugeordneten Hubbereiche $\Delta h_1$ und $\Delta h_2$, kommunizierende Verbindung eines unter dem Betriebsdruck stehenden Ventilraumes mit dem Druckspeicher gegeben ist, wird von diesem sobald das Hauptsteuerventil im unteren Totpunkt der Messerbewegung in seine Grundstellung zurückgeschaltet wird, sowie auch dann, wenn der Ventilkolben des Hauptsteuerventils sich im Bereich der oberen Endstellung des Obermessers der Kopierstellung nähert, Drucköl, das unter dem Betriebsdruck steht, in den Speicher geleitet und dadurch eine Dämpfungswirkung erzielt, die geräuschmindernd wirkt.

Durch die Merkmale der Ansprüche 2 bis 5 sind zweckmäßige konstruktive Gestaltungen des Hauptsteuerventils der Blechscheren-Steuerung angegeben, durch die im Sinne einer Folgesteuerung erreicht wird, daß das Hauptsteuerventil erst dann in seine dem Vorschub- und Schneidbetrieb zugeordnete Funktionsstellung gelangen kann, nachdem die Niederhalter angelegt sind.

Die gemäß Anspruch 6 vorgesehene Anordnung des Kopieranschlages ist konstruktiv einfach und funktionell zuverlässig.

Durch die gemäß Anspruch 7 vorgesehene Gestaltung der elektrohydraulischen Steuereinheit des Scherenantriebes wird sichergestellt, daß in die Niederhalter ein für die Fixierung der Blechbahn hinreichender Druck einkoppelbar ist.

Durch die Merkmale der Ansprüche 8 und 9 wird sichergestellt, daß die Niederhalter angelegt sind, bevor das Obermesser seinen Schneid-Hub ausführen kann.

Mittels eines gemäß Anspruch 10 vorgesehenen und ausgelegten Einlaßventils, das gemäß den Merkmalen des Anspruchs 11 als druckgesteuertes Ventil ausgebildet sein kann, und/oder eines gemäß Anspruch 12 vorgesehenen und ausgelegten Auslaßventils, das gemäß den Merkmalen des Anspruchs 13 als einfaches druckgesteuertes Ventil ausgebildet sein kann, ist ein bedarfsgerecht rasches Anlegen der Niederhalter unter Nutzung der im Druckspeicher gespeicherten hydraulischen Energie und auch eine rasche Entlastung der Niederhalter möglich. Hierbei hat die Gestaltung des Auslaßventils gemäß Anspruch 14 den Vorteil, daß in die Niederhalter auch ein höherer Druck als der Speicherdruck eingekoppelt werden kann, wobei der in die Niederhalter einkoppelbare Druck zweckmäßigerweise durch ein Druckminderventil limitiert ist.

Die zur Aufladung des Druckspeichers erforderliche Speicher-Ladeventilanordnung ist gemäß Anspruch 16 als druckgesteuerte Ventilanordnung ausgebildet, die ein Umschaltventil umfaßt, mittels dessen die Konstantpumpe von Lade-Betrieb auf Umlaufbetrieb umschaltbar ist, sowie ein Hilfsventil, mittels dessen ein Entlastungssteuerpfad freigebbar und absperrbar ist, dessen Freigabe Voraussetzung für den Ladebetrieb ist. Dieses Hilfsventil ist in bevorzugter Gestaltung in das Hauptsteuerventil integriert, wofür durch die Merkmale des Anspruchs 18 eine einfache Art der konstruktiven Realisierung angegeben ist.

Ein gemäß den Merkmalen des Anspruchs 19 vorgesehenes und ausgelegtes Flächen-Umschaltventil ermöglicht eine Erweiterung des Vorschubkraft-Bereiches, mit dem die Blechschere betreibbar ist und erhöht somit deren Einsatzmöglichkeiten.

Das Pilotventil ist in der gemäß Anspruch 20 vorgesehenen Gestaltung auch zur Steuerung einer langsamen Abwärtsbewegung des Obermessers und zur Entladung des Druckspeichers am Ende eines länger dauernden Betriebes der Blechschere benutzbar. Die Vorbereitung der Blechschere auf den Schneidbetrieb erfolgt durch Einstellung eines Schneidwinkels des Obermessers gemäß Anspruch 21 mittels einer Steuerventilanordnung unter Nutzung des Druckspeichers in der Kopierstellung des Hauptsteuerventils.

Weitere Einzelheiten der erfindungsgemäßen Blechschere ergeben sich aus der nachfolgenden Beschreibung eines speziellen Ausführungsbeispiels anhand der Zeichnung. Es zeigen:

Fig. 1a       eine schematisch vereinfachte Gesamtansicht einer erfindungsgemäßen hydraulisch angetriebenen Blechschere;

Fig. 1b       eine schematisch vereinfachte Seitenansicht der Blechschere gemäß Fig. 1a;

Fig. 2       ein Hydraulik-Schaltbild der Antriebseinrichtung der Blechschere gemäß den Figuren 1a und 1b;

Fig. 3a bis 3c       dem Rückzugsbetrieb des Obermessers der Blechschere, dem Ladebetrieb eines Druckspeichers der Antriebseinrichtung und dem Schneidbetrieb der Schere zugeordnete Funktionsstellungen des Kolbens eines Hauptsteuerventils der Antriebseinrichtung gemäß Figur 2;

Fig. 4       Einzelheiten einer Speicher-Lade-Ventilanordnung;

Fig. 5 Einzelheiten eines Einlaßventils zur Druckbeaufschlagung von Niederhalterzylindern der Blechschere und

Fig. 5b Einzelheiten eines zur Druckentlastung der Niederhalter-Zylinder vorgesehenen Auslaßventils.

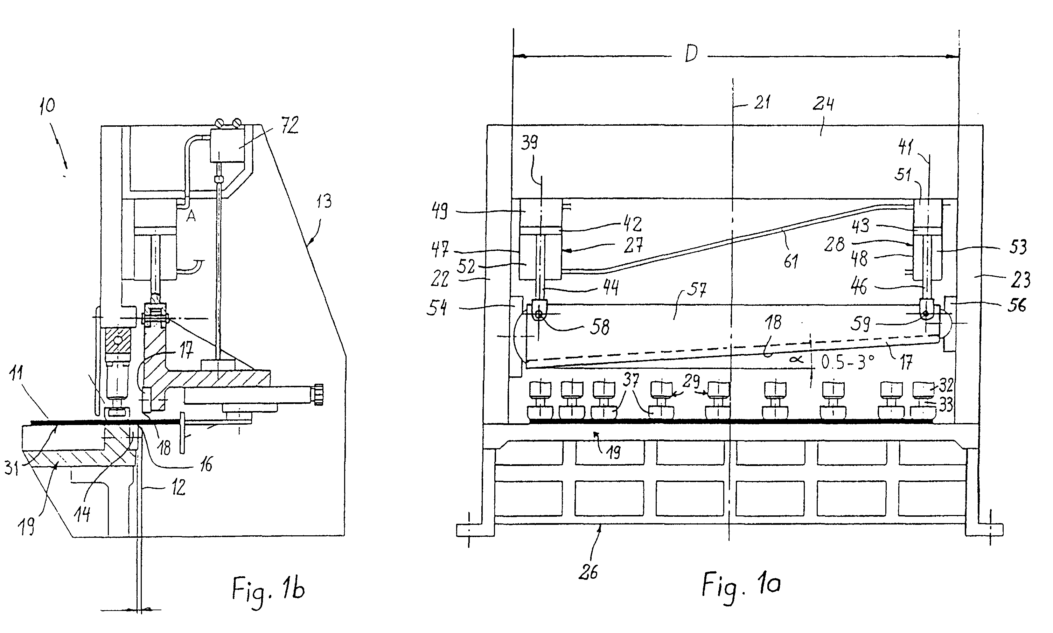

Die in den Fig. 1a und 1b jeweils insgesamt mit 10 bezeichnete Blechschere ist allgemein für einen Einsatz in der blechverarbeitenden Industrie gedacht, um eine streifenförmige Blechbahn, die z. B. eine Dicke im mm-Bereich hat, in rechteckige Blechtafeln definierter Länge und Breite zu zerschneiden. Eine solche Blechschere 10 kann auf eine "große" Schnittlänge von mehreren Metern, z. B. 4 m ausgelegt sein, die einer maximalen Länge der abzuschneidenden Blechtafeln entspricht, deren Breite durch den Transportweg eingestellt wird, um den die Blechbahn 11 von Schnitt zu Schnitt rechtwinklig zur Schnittebene 12 verschoben wird.

Die Blechschere 10 umfaßt ein insgesamt mit 13 bezeichnetes Scherengestell mit einem an diesem fest montierten Untermesser 14 mit horizontal verlaufender freier Schneidkante 16 und mit einem an dem Scherengestell 13 auf- und abbewegbaren Obermesser 17, dessen geradlinig verlaufende Schneidkante 18 mit der Schneidkante 16 des Untermessers einen einstellbaren Schneidwinkel $\alpha$ einschließt, der, je nach der Dicke der Blechbahn 11, zwischen einem minimalen Wert von 0,5° und einem maximalen Wert von ca. 3° veränderbar ist, wobei bei zunehmenden Dicken der der Schneidbearbeitung zu unterwerfenden Blechbahnen auch zunehmende Beträge des Schneidwinkels $\alpha$ entsprechen.

Das Scherengestell 13 umfaßt ein insgesamt mit 19 bezeichnetes Scherenbett, das das horizontale Auflager für die der Schneidbearbeitung zu unterwerfende Blechbahn 11 bildet. Das Scherenbett 19 erstreckt sich zwischen bezüglich der vertikalen Längsmittelebene 21 der Blechschere 10 symmetrisch angeordneten und ausgebildeten im Schneidbetrieb auf Zug belasteten, stabilen Führungssäulen 22 und 23, die fest mit dem Scherenbett 19 verbunden sind.

Zwischen den oberen Endabschnitten der Führungssäulen 22 und 23 erstreckt sich eine mit diesen fest verbundene, stabile Traverse 24, die das insoweit erläuterte Scherenbett 19 und die Säulen 22 und 23 umfassende Gestell zu einem in sich geschlossenen, der Grundform nach rechteckigen Rahmen ergänzt, der geeignet ist, die im Schneidbetrieb auftretenden Reaktionskräfte aufzunehmen, ohne hierdurch nennenswerte Verformungen zu erfahren. Das Scherenbett 19 ist über ein Fußteil 26 standfest am Werkhallenboden verankert.

Die Traverse 24 ist zum einen der Träger für zwei lineare doppelt-wirkende Antriebs-Hydrozylinder 27 und 28, mittels derer das Obermesser 17 zur Ausführung seiner Schneidbewegung bis in einen unteren Totpunkt derselben sowie zur Ausführung einer Rückzugsbewegung bis in einen oberen Totpunkt der Messer-Position antreibbar ist, und zum anderen auch der Träger für eine Mehrzahl von Niederhalter-Zylindern 29, mittels derer die Blechbahn 11 zur Vorbereitung des Schneidvorganges und Sicherung der Blechbahn-Position während des Schneidvorganges im Bereich des Untermessers 14 an das Scherenbett 19 andrückbar ist, mit dessen Auflageebene 31 die Schneidkante 16 des Untermessers 14 koplanar verläuft, das gleichsam das "freie" Ende des Scherenbetts 19 bildet.

Die Niederhalter-Zylinder 29 sind als einfach wirkende lineare Hydrozylinder ausgebildet, die zwischen den Führungssäulen 22 und 23 des Scherenbetts 19 über die Schnittlänge etwa äquidistant verteilt angeordnet sind, wobei der Abstand zwischen benachbarten Niederhalter-Zylindern 29 einen typischen Wert um 0,4 m hat.

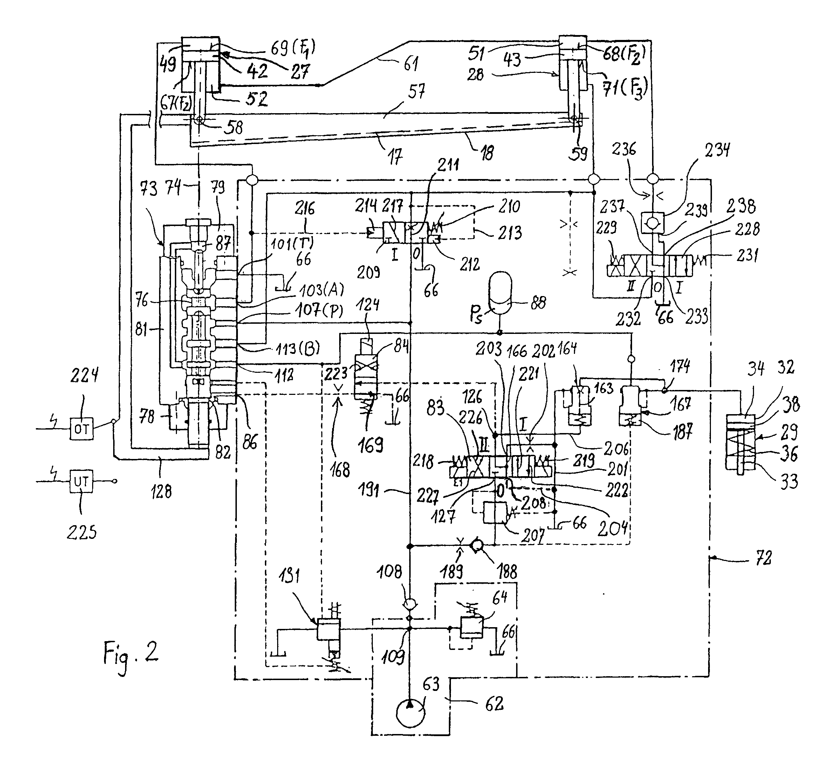

Die Niederhalter-Zylinder 29 haben jeweils eine einseitig nach unten aus dem Zylindergehäuse 32 austretende Kolbenstange 33, die bei Druckeinkopplung in den bodenseitig angeordneten Antriebsdruckraum 34 (Fig. 2) des Niederhalter-Zylinders 29 gegen die Rückstellkraft einer Kolbenfeder 36 nach unten ausfahrbar und dadurch mit einem Stützfuß 37 an der Blechbahn 11 in die die Blechbahn kraftschlüssig am Scherenbett 19 haltende Position bringbar ist. Bei Druckentlastung des Antriebsdruckraumes 34 des jeweiligen Niederhalter-Zylinders 29 wird der Niederhalterkolben 38 durch die Kolbenfeder in seine obere Endstellung zurückgebracht, in der die Vorspannung der Kolbenfeder 36 noch einem Druck von etwa 5 bar äquivalent ist. Die Kolbenfeder 36 ist als "schwache" Feder ausgebildet, deren Rückstellkraft zwischen dem in der oberen Endstellung des Niederhalterkolbens 38 gegebenen Wert und dem in der unteren Endstellung, der Anpreßstellung des Niederhalterkolbens 38 gegebenen höchstmöglichen Wert nur wenig, z. B. um 50 %, variiert, wobei die Rückstellkraft der Kolbenfeder in jedem Falle klein gegen die Kraft ist, die durch Druckbeaufschlagung des Antriebsdruckraumes 34 des jeweiligen Niederhalter-Zylinders 29 auf den Niederhalterkolben 38 zum Anpressen der Blechbahn 11 an das Scherenbett 19 ausübbar ist.

Die zum Antrieb des Obermessers 17 vorgesehenen linearen Antriebs-Hydrozylinder 27 und 28 sind als doppelt-wirkende Zylinder ausgebildet, die an der Traverse 24 in einer "hängenden" Anordnung montiert sind, mit entsprechend der Bewegungsrichtung des Obermessers vertikalem Verlauf ihrer zentralen Längsachsen 39 bzw. 41. Die Antriebs-Hydrozylinder 27 und 28 sind als Differentialzylinder unterschiedlicher geometrischer Dimensionen ausgebildet, jedoch so ausgelegt, daß sie jeweils dieselben, im Bereich der den Führungssäulen 22 und 23 benachbarten Messerenden wirksamen Vorschub- bzw. Rückzugskräfte entfalten können.

Die beiden Antriebs-Hydrozylinder 27 und 28 haben, mit ihren Antriebszylinderkolben 42 bzw. 43 fest verbundene Kolbenstangen 44 bzw. 46, die nach unten aus dem Gehäuse 47 bzw. 48 des jeweiligen Antriebs-Hydrozylinders 27 bzw. 28 austreten und mit dem Obermesser 17 gelenkig verbunden sind.

Durch den jeweiligen Antriebszylinderkolben 42 bzw. 43 ist innerhalb des jeweiligen Antriebs-Hydrozylinders 27 bzw. 28 ein oberer, bodenseitiger Antriebsdruckraum 49 bzw. 51 gegen einen unteren, stangenseitigen Antriebsdruckraum 52 bzw. 53 des jeweiligen Antriebs-Hydrozylinders 27 bzw. 28 druckdicht verschiebbar abgegrenzt, so daß durch Durckbeaufschlagung der oberen, bodenseitigen Antriebsdruckräume 49 und 51 der beiden Antriebs-Hydrozlyinder 27 und 28 die Abwärtsbewegung des Obermessers 17 und dessen Schneidbetrieb steuerbar sind und durch Druckbeaufschlagung der unteren, stangenseitigen Antriebsdruckräume 52 und 53 der Antriebs-Hydrozylinder 27 und 28 die aufwärts gerichteten Rückzugsbewegungen des Obermessers 17 steuerbar sind, die in dessen obere Totpunkt(OT)-Lage zurückführen, aus der heraus ein nachfolgender Schneidvorgang gestartet werden kann.

Die beiden Antriebs-Hydrozylinder 27 und 28 sind jeweils in unmittelbarer Nähe der Führungssäulen 22 und 23 angeordnet, an denen das Obermesser 17 mit Gleit-Führungsstücken 54 und 56 vertikal auf- und abverschiebbar geführt ist. Durch diese Gleit-Führungsstücke 54 und 56 ist sichergestellt, daß sich die Schneidkante 18 des Obermessers 17 nur in der Schnittebene 12 bewegen kann, die von der Schneidkante 16 des Untermessers 14 in einem kleinen Abstand angeordnet ist, der einem für einen qualitativ guten Schnitt geeigneten Messerspalt entspricht.

Das Obermesser 17 der Blechschere 10 ist auswechselbar an einem stabilen Obermesserträger 57 angeordnet, der mit den Kolbenstangen 44 und 46 der beiden Antriebs-Hydrozylinder 27 und 28 über je ein Schwenkgelenk verbunden ist, deren Gelenkachsen 58 bzw. 59 (Fig. 2) rechtwinklig zu den Schneidkanten des Obermessers 17 und des Untermessers 14 verlaufen. Die durch die Gelenkachsen 58 und 59 repräsentierten Schwenkgelenke erlauben die Einstellung kleiner Schneidwinkel $\alpha$ zwischen 0,5 und maximal 3°, die zweckmäßigerweise so eingestellt werden, damit die Blechschere 10 mit vergleichsweise geringen Schneidkräften betrieben werden kann, die im 10 kN- bis 100 kN-Bereich liegen können.

Die beiden Antriebs-Hydrozylinder 27 und 28, an deren Kolbenstangen 44 und 46 der Obermesserträger 57 des Obermessers 17 gleichsam hängend angeordnet ist, sind hydraulisch in Reihe geschaltet und dahingehend ausgelegt, daß die im Schneidbetrieb auf das Obermesser 17 entfalteten Vorschubkräfte, die symmetrisch zur Längsmittelebene 21 der Blechschere 10 angreifen, dem Betrage nach gleich sind, dies auch unter Berücksichtigung der Gewichtsanteile des Obermesserträgers 57, die in Schneid-Vorschubrichtung des Obermesssers 17 wirksam sind.

Die hydraulische Reihenschaltung der beiden Antriebs-Hydrozylinder 27 und 28 ist so realisiert, daß der stangenseitige Antriebsdruckraum 52 des einen, gemäß der Darstellung der Fig. 1a linken Antriebs-Hydrozylinders 27, der mit größeren Querschnittsabmessungen seines Antriebszylinderkolbens 42 und der wirksamen Kolbenflächen realisiert ist, mit dem bodenseitigen Antriebsdruckraum 51 des mit kleineren Querschnittsabmessungen realisierten, "rechten" Hydrozylinders 28 über eine "Schaukelöl"-Leitung 61 verbunden ist, über die Hydrauliköl, das bei einer Abwärtsbewegung des Antriebszylinderkolbens 42 des linken Antriebs-Hydrozylinders 27 aus dessen stangeseitigem Antriebsdruckraum 52 verdrängt wird, in den bodenseitigen Antriebsdruckraum 51 des rechten, kleineren Antriebs-Hydrozylinders 28 überströmen und dadurch, volumetrisch gesteuert, die Abwärtsbewegung des Antriebszylinderkolbens 43 des kleineren Hydrozylinders 28 vermitteln kann. In einer Betriebssituation, in der das Obermesser 17 sich nach unten - auf die Blechbahn 11 zubewegt, ist in den bodenseitigen Antriebsdruckraum 49 des linken Antriebs-Hydrozylinders 27 und in den stangenseitigen Antriebsdruckraum 53 derselbe Druck eingekoppelt, der durch das insgesamt mit 62 bezeichnete Druckversorgungsaggregat (Fig. 2) bereitgestellt wird, das aus einer elektrisch angetriebenen Konstantpumpe 63, die hohe Ausgangsdrükke erzeugen kann, und einem Druckbegrenzungsventil 64 besteht, das den maximalen Ausgangsdruck des Druckversorgungsaggregats 62 auf einen einstellbaren Wert, z. B. auf einen Wert von 250 bar begrenzt.

Im Abwärts-Vorschubbetrieb der beiden Antriebs-Hydrozylinder 27 und 28 aus dem stangenseitigen Antriebsdruckraum 53 des kleineren Hydrozylinders 28 verdrängtes Hydrauliköl wird, lastabhängig, entweder dem Hydrauliköl-Strom hinzugefügt, der zur Steuerung eines Eil-Vorschubetriebes in den bodenseitigen Antriebsdruckraum 49 des größeren Antriebs-Hydrozylinders 27 eingespeist wird, oder, in einem Last-Vorschubbetrieb, in dem große Schneidkräfte entfaltet werden müssen, in den drucklosen Vorratsbehälter des Druckversorgungsaggregats 62 abgelassen, wobei in diesem Betriebszustand der Blechschere 10 der Differentialbetrieb der beiden in Reihe geschalteten Antriebs-Hydrozylinder 27 und 28 aufgehoben ist und diese ihre maximalen Vorschubkräfte entfalten können.

Im aufwärts gerichteten Rückzugshub des Obermessers 17 wird der Ausgangs-Ölstrom der Konstantpumpe 63 in den stangenseitigen Antriebsdruckraum 53 des kleineren Antriebs-Hydrozylinders 28 eingekoppelt, von dessen bodenseitigem Antriebsdruckraum 51 das Hydrauliköl über die Schaukelöl-Leitung 61 zum stangenseitigen Antriebsdruckraum 52 des größeren Antriebs-Hydrozylinders 27 strömt, dessen bodenseitiger Antriebsdruckraum 49 in diesem Betriebszustand mit dem drucklosen Vorratsbehälter 66 des Druckversorgungsaggregats 62 kommunizierend verbunden ist.

Um in jeder Bewegungsphase des Obermessers 17 Gleichlauf der Antriebszylinderkolben 42 und 43 der beiden Antriebs-Hydrozylinder 27 und 28 zu erzielen, haben die Kreisringfläche 67 des Antriebszylinderkolbens 42 des größeren Antriebs-Hydrozylinders 27, die die axial bewegliche Begrenzung seines stangenseitigen Antriebsdruckraumes 52 bildet, und die Kreisfläche 68 des Antriebszylinderkolbens 43 des kleineren Hydrozylinders 28, die die axial bewegliche Begrenzung seines bodenseitigen Antriebsdruckraumes 51 bildet, denselben Betrag $F_2$.

In einer typischen Auslegung der Antriebs-Hydrozylinder 27 und 28 hat die den bodenseitigen Antriebsdruckraum 49 des größeren Antriebs-Hydrozylinders 27 axial beweglich begrenzende Kolbenfläche 69 einen Betrag $F_1$, der etwa dem doppelten Betrag der Kreisringfläche 67 dieses Antriebszylinderkolbens 42 entspricht und dem dreifachen Wert der Ringfläche 71 ($F_3$), die die axial bewegliche Begrenzung des stangenseitigen Antriebsdruckraumes 53 des kleineren Antriebszylinders 28 des Scherenantriebes bildet.

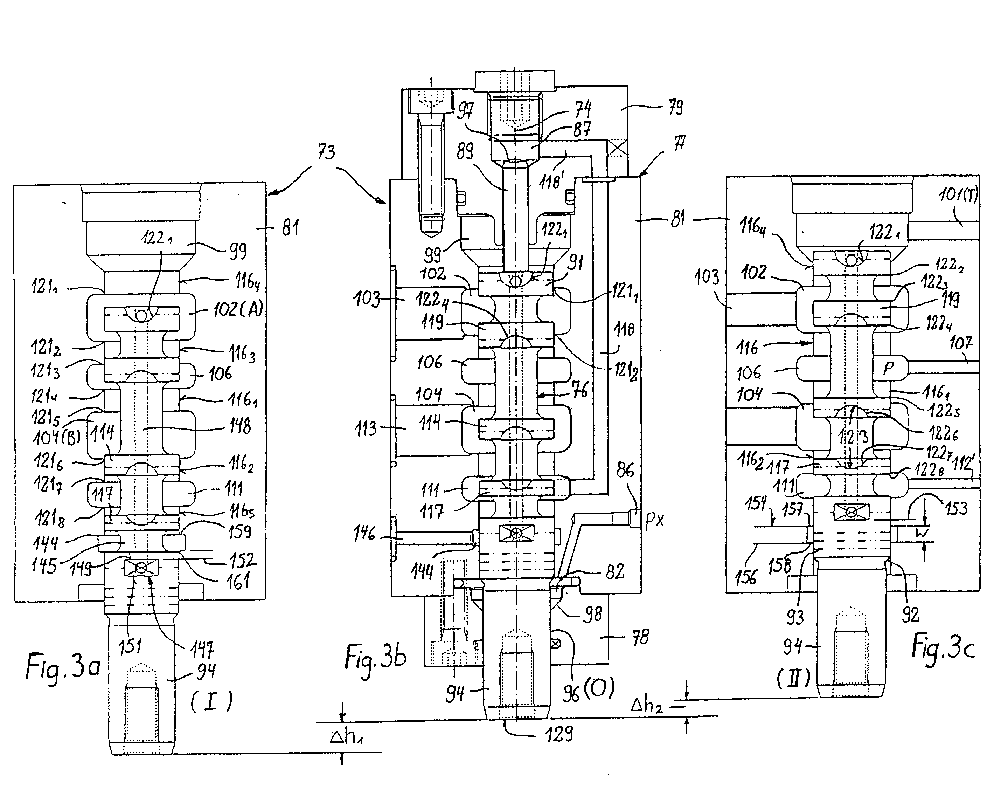

Zur Steuerung der Bewegungen des Obermessers 17 sowie des Anlegens der Niederhalter 29 an die Blechbahn 11 und der Entlastung der Niederhalter-Zylinder 29 ist eine in der Fig. 2 insgesamt mit 72 bezeichnete elektrohydraulische Steuereinheit vorgesehen, zu deren mehr in die Einzelheiten gehender Erläuterung auch auf die Detaildarstellungen der Fig. 3a bis 3c, die Fig. 4 sowie die Fig. 5a und 5b verwiesen sei.

Die elektrohydraulische Steuereinheit 72 umfaßt als "zentrales" Steuerungselement ein insgesamt mit 73 bezeichnetes Hauptsteuerventil, mittels dessen die auf- und abwärts gerichteten Bewegungsphasen des Obermessers 17 der Blechschere 10 sowie positionsgeregelte Stillstandsphasen des Obermessers 17 in den OT-Positionen der Kolben 42 und 43 der beiden Antriebs-Hydrozylinder 27 und 28 steuerbar sind.

Das Hauptsteuerventil 73 ist als "lineares" Schieberventil ausgebildet, das bei dem zur Erläuterung gewählten Ausführungsbeispiel "stehend" angeordnet ist, derart, daß die zentrale Längsachse 74 des Hauptsteuerventils 73, vertikal, d. h. parallel zu den zentralen Längsachsen 39 und 41 der Antriebs-Hydrozylinder 27 und 28 verläuft.

Der insgesamt mit 76 bezeichnete Kolben des Hauptsteuerventils 73 ist innerhalb des insgesamt mit 77 bezeichneten Ventilgehäuses zwischen einer unteren, in der Fig. 3a dargestellten Endstellung und einer oberen, in der Fig. 3c dargestellten Endstellung auf- und abverschiebbar, wobei die beiden Endstellungen durch Anschlagwirkung des Hauptsteuerventilkolbens 76 mit einem unteren Gehäuseabschlußteil 78 bzw. einem oberen Gehäuseabschlußteil 79 markiert sind, zwischen denen sich ein "mittlerer" Gehäuseblock 81 erstreckt, an dem die Versorgungsanschlüsse für die Verbindung des Hauptsteuerventils 73 mit dem Druckversorgungsaggregat 62, die Verbraucheranschlüsse für die Bewegungssteuerung der Antriebs-Hydrozylinder 27 und 28 sowie Steueranschlüsse für die Funktionssteuerung des Hauptsteuerventils 73 angeordnet sind.

Das Hauptsteuerventil 73 ist als druckgesteuertes Ventil ausgebildet, das, im wesentlichen, durch den in einer unteren Steuerkammer 82 des Hauptsteuerventils 73 herrschenden Druck steuerbar ist, der über ein elektrisch ansteuerbares Pilotventil 83 und ein zwischen dieses und das Hauptsteuerventil 73 geschaltetes, ebenfalls elektrisch gesteuertes Umschaltventil 84 und einen x-Steueranschluß 86 in die untere Steuerkammer 82 einkoppelbar ist. Im Betrieb der Blechschere 10 ist in eine obere Steuerkammer 87 des Hauptsteuerventils 73, die innerhalb des oberen Gehäuseabschlußteils 79 angeordnet ist, permanent ein Druck angekoppelt, auf den momentan ein Druckspeicher 88 aufgeladen ist, der am Beginn eines erneuten Zyklus gleichsam als Hilfsdruckquelle für ein rasches Anlegen der Niederhalter-Zylinder 29 zur sicheren Fixierung der Blechbahn 11 am Scherenbett 19 vorgesehen ist. Durch den gleichsam permanent in die obere Steuerkammer 87 eingekoppelten Speicherdruck $p_S$ wird auf den Kolben 76 des Hauptsteuerventils 73 eine diesen in Richtung auf die in der Fig. 3a dargestellte untere Endstellung drängende Kraft ausgeübt, deren Betrag $K_R$ durch die Beziehung

$$K_R = p_S \cdot A_1 \qquad (1)$$

ausgeübt, in der mit $A_1$ die wirksame Querschnittsfläche eines am Hauptsteuerventilkolben 76 axial abgestützten Betätigungsstößels 89 bezeichnet ist, der an einem oberen Endflansch 91 des Hauptsteuerventilkolbens 76 zentral angreift.

Durch einen in die untere Steuerkammer 82 des Hauptsteuerventils 73 angekoppelten Steuerdruck $p_X$ wird auf den Hauptsteuerventilkolben 76 eine aufwärts gerichtete, d. h. den Hauptsteuerventilkolben 76 in seine obere, in der Fig. 3c dargestellte Endstellung drängende Kraft ausgeübt, deren Betrag $K_A$ durch die Beziehung

$$K_A = p_X \cdot A_2 \qquad (2)$$

ausgeübt, in der mit $A_2$ der effektive Betrag einer ringförmigen Steuerfläche 92 bezeichnet ist, durch die ein unterer, zylindrischer Endabschnitt 93 gegen einen dem Durchmesser nach etwas kleineren stößelförmigen Kolbenfortsatz 94 abgesetzt ist, der, nach unten aus dem unteren Gehäuseabschlußteil 78 herausragend, in einer axialen Durchgangsbohrung 96 desselben druckdicht verschiebbar geführt ist.

Die ringförmige, untere Steuerfläche 92 des Hauptsteuerventilkolbens 76 ist etwa um den Faktor 2 größer als die dem Speicherdruck $p_S$ ausgesetzte, obere Steuerfläche 97, die der Querschnittsfläche $A_1$ des

Betätigungsstößels 89 entspricht, so daß ein in die untere Steuerkammer eingekoppelter Steuerdruck $p_X$ ab einem Wert $p_S \cdot A_1/A_2$ ausreicht, um den Hauptsteuerventilkolben 76 in die in der Fig. 3c dargestellte, obere Endstellung zu schieben. Ist andererseits die untere Steuerkammer 82 druckentlastet, gelangt der Hauptsteuerventilkolben 76 in die in der Fig. 3a dargestellte, untere Endstellung, in der er mit der ringförmigen Steuerfläche 92 an einer konischen Gegenfläche 98 des unteren Gehäuseabschlußteils 78 abgestützt ist.

Die in der Fig. 3c dargestellte, obere Endstellung des Hauptsteuerventilkolbens 76 ist dem Vorschub- und Schneidbetrieb der Blechschere 10 zugeordnet, in dem sich das Obermesser 17 auf die Blechbahn 11 zu bewegt sowie diese durchtrennt. Die in der Fig. 3a dargestellte, untere Endstellung des Hauptsteuerventilkolbens 76, ist dem aufwärts gerichteten Rückzugsbetrieb des Obermessers 17 zugeordnet, in dem die Kolbenstangen 44 und 46 der Antriebs-Hydrozylinder 27 und 28 eingefahren werden, bis schließlich ein oberer Totpunkt der Stellung des Obermessers 17 erreicht ist, dem die in der Fig. 3b dargestellte Mittelstellung des Hauptsteuerventilkolbens 76 zugeordnet ist.

In der oberen Endstellung des Hauptsteuerventilkolbens 76 ist ein oberer Anschlußraum 99 des Hauptsteuerventils 73, der über einen T-Versorgungsanschluß 101 mit dem drucklosen Vorratsbehälter 66 des Druckversorgungsaggregats 62 in ständig-kommunizierender Verbindung steht, durch den oberen Endflansch 91 des Hauptsteuerventilkolbens 76 druckdicht gegen einen A-Ringraum 102 abgegrenzt, der mit dem A-Verbraucheranschluß 103 in kommunizierender Verbindung steht, an den der bodenseitige Antriebsdruckraum 49 des größeren Antriebs-Hydrozylinders 27 angeschlossen ist.

In der oberen Endstellung des Hauptsteuerventilkolbens 76 steht der A-Ringraum 102 mit einem größtmöglichen Überströmquerschnitt in kommunizierender Verbindung mit einem zwischen diesem und einem B-Ringraum 104 des Hauptsteuerventils 73 angeordneten P-Ringraum 106, der seinerseits mit dem P-Versorgungsanschluß 107 des Hauptsteuerventils 73 in permanent-kommunizierender Verbindung steht, an den über ein Ausgangs-Rückschlagventil 108 (Fig. 2) der P-Druckausgang 109 der Konstantpumpe 63 des Druckversorgungsaggregats 62 angeschlossen ist. Der B-Ringraum 104, der seinerseits zwischen dem P-Ringraum 106 und einem Speicher-Ringraum 111 des Hauptsteuerventils 73, der über einen Speicheranschluß 112 des Hauptsteuerventils 73 mit dem Druckspeicher 88 in kommunizierender Verbindung steht, angeordnet ist und über einen B-Verbraucheranschluß 113 mit dem stangenseitigen Antriebsdruckraum 53 des kleineren Antriebs-Hydrozylinders 28 verbunden ist, ist jedoch in der oberen Endstellung des Hauptsteuerventilkolbens 76 sowie in allen Zwischenstellungen zwischen dieser Endstellung und der in der Fig. 3b dargestellten Mittelstellung des Hauptsteuerventilkolbens 76 gegen den P-Ringraum 106 des Hauptsteuerventils abgesperrt. Die diesbezügliche Absperrung vermittelt ein B-Sperrflansch 114, der in der oberen Endstellung des Hauptsteuerventilkolbens 76 in einen zentralen, sich zwischen dem P-Ringraum 106 und dem B-Ringraum 104 erstreckenden Abschnitt $116_1$ der insgesamt mit 116 bezeichneten axial durchgehenden Ventilbohrung des mittleren Gehäuseblocks 81 eingetaucht ist, die sich zwischen dem oberen Gehäuseabschlußteil 79 und dem unteren Gehäuseabschlußteil 78 erstreckt.

In der oberen Endstellung des Hauptsteuerventilkolbens ist auch der Speicher-Ringraum 111 gegen den B-Ringraum 104 abgesperrt, wobei die diesbezügliche Absperrung durch einen Speicher-Sperrflansch 117 des Hauptsteuerventilkolbens 76 vermittelt ist, der in der oberen Endstellung des Hauptsteuerventilkolbens 76 in einen unteren Zwischenabschnitt $116_2$ der zentralen Gehäusebohrung 116 eingetaucht ist, der sich zwischen dem B-Ringraum 104 und dem Speicher-Ringraum 111 erstreckt.

Der Speicherringraum 111 ist über einen "radialen" Versorgungskanal 112' (Fig. 3c) mit dem Speicheranschluß 112 verbunden und ist über einen den mittleren Gehäuseblock 81 etwa axial durchsetzenden Steuerkanal 118, der, der Einfachheit der Darstellung halber, lediglich in den Figuren 2 und 3b schematisch dargestellt ist, und einen diesen fortsetzenden Anschlußkanal 118' des oberen Gehäuseabschlußteils 79 mit der oberen Steuerkammer 87 des Ventilgehäuses 77 in ständig-kommunizierender Verbindung gehalten, so daß der Speicherdruck gemäß der Beziehung (1) die Rückstellkraft bestimmt, gegen die der Ventilkolben 76 durch Steuerdruck-Einkopplung in den unteren Steuerraum 82 "nach oben verschiebbar" ist.

Zwischen dem oberen Endflansch 91 und dem B-Sperrflansch 114 hat der Kolben 76 des Hauptsteuerventils einen A-Sperrflansch 119, der in der dem Rückzugsbetrieb des Schneidmessers 17 zugeordneten Funktionsstellung I des Hauptsteuerventils 73, die in der Fig. 3a dargestellt ist, in den den A-Ringraum 102 mit dem P-Ringraum 106 verbindenden, oberen Zwischenabschnitt $116_3$ der axial durchgehenden Ventilbohrung 116 eingetaucht ist und dadurch den A-Ringraum 102 gegen den P-Ringraum 106 druckdicht absperrt. In der der Abwärts-Bewegung des Obermessers 17 zugeordneten Funktionsstellung II des Hauptsteuerventils 73 , die in der Fig. 3c dargestellt ist, ist der A-Sperrflansch 119 vollständig in den A-Ringraum 102, dessen axiale Ausdehnung größer ist als die axiale Dicke des A-Sperrflansches 119, eingetaucht, so daß in dieser Funktionsstellung II kommunizierende Verbindung zwischen dem P-Ringraum 106 und dem A-Ringraum 102 besteht, der in dieser Funktionsstellung gegen den drucklosen T-Ringraum 99 dadurch abgesperrt ist, daß der obere Endflansch 91 des Kolbens 76 in den oberen Endabschnitt $116_4$ der zentralen Ventilgehäusebohrung 116 eingetaucht ist, der sich zwischen deren T-Anschlußraum 99 und dem A-Ringraum 102 erstreckt.

In der Aufwärts-Bewegungen des Obermessers 17 zugeordneten Funktionsstellung I des Hauptsteuerventils 73 ist der Speicher-Sperrflansch 117 vollständig in den unteren Endabschnitt $116_5$ der durchgehenden Ventilbohrung 116 eingetaucht, in welcher der untere Kolbenendabschnitt 93 druckdicht verschiebbar angeordnet ist. In der dem Abwärts-Vorschubbetrieb des Obermessers 17 zugeordneten Funktionsstellung II des Hauptsteuerventils 73 ist der Speicher-Sperrflansch 117 des Ventilkolbens 76 in den unteren Zwischenabschnitt $116_2$ der zentralen Ventilbohrung 116 eingetaucht und sperrt "von unten her" den Speicher-Ringraum 111 gegen den B-Ringraum 104 ab.

Der A-Ringraum 102, der P-Ringraum 106, der B-Ringraum 104 und der Speicher-Ringraum 111 sind gehäuseseitig durch die zentral durchgehende Gehäusebohrung 116 abschnittsweise radial erweiternde Ringnuten gebildet, deren Nutwangen, kreisförmige gehäuseseitige Steuerkanten $121_1$ bis $121_8$ bildend, radial zur zentralen Längsachse 74 der zentralen Ventilbohrung 116 verlaufen.

Kolbenseitige Steuerkanten $122_1$ bis $122_8$, durch deren negative oder positive Überdeckungen mit den korrespondierenden gehäuseseitigen Steuerkanten $121_1$ bis $121_8$ die für die jeweilige Funktion genutzten Ventil-Wege-Kombinationen freigegeben beziehungsweise die nicht genutzen Wege abgesperrt sind, sind durch die peripheren Randkanten der Kolbenflansche 91, 119, 114 und 117 gebildet, über die ihre radialen Flanschflächen an die zylindrischen Dichtflächen anschließen, mit denen die Kolbenflansche in den zugeordneten Abschnitten der zentralen Ventilbohrung 116 druckdicht gleitend verschiebbar sind.

Bei der zur Erläuterung gewählten Gestaltung des Hauptsteuerventils 73 sind die "untere", dem A-Ringraum zugewandte Steuerkante $122_2$ des oberen Endflansches 91, die "obere", dem oberen Endflansch 91 zugewandte Steuerkante $122_3$ des A-Sperrflansches 119, die obere, dem P-Ringraum 106 zugewandte Steuerkante $122_5$ des B-Sperrflansches 114 und die untere, dem zylindrischen Endabschnitt 93 des Ventilkolbens 77 zugewandte Steuerkante $122_8$ des Speicher-Sperrflansches 117 jeweils als in einer rechtwinklig zur zentralen Längsachse 74 des Hauptsteuerventils 73 verlaufenden Ebene gelegene Kreiskanten ausgebildet, in deren mit der korrespondierenden gehäuseseitigen Steuerkante fluchtender Anordnung jeweils die 0-Überdeckung gegeben ist; der Verlauf der oberen, dem oberen Anschlußraum 99 des Hauptsteuerventils 73 zugewandten Steuerkante $122_1$, der Verlauf der unteren, dem P-Ringraum 106 zugewandten Steuerkante $122_4$ des A-Sperrflansches 119, der Verlauf der unteren, dem Speicher-Ringraum 111 zugewandten Steuerkante $122_6$ des B-Sperrflansches 114 und der Verlauf der oberen, dem B-Sperrflansch 114 zugewandten Steuerkante $122_7$ des Speicher-Sperrflansches 117 ist durch den peripheren Randverlauf von Flanschkerben 123 gegeben, die bei der zur Erläuterung dargestellten Form mit etwa kreisbogenförmigem Konturenverlauf mittels eines Kugelkopffräsers ausgefräst sein können. Bei der dargestellten Form und Anordnung der Flanschkerben 123 ist eine 0-Überdeckung der durch eine solche Flanschkerbe gebildeten Steuerkante mit einer korrespondierenden gehäuseseitigen, "ebenen" Steuerkante dann gegeben, wenn die Ebene der gehäuseseitigen Steuerkante gleichzeitig auch die Tangentialebene der gekrümmten Kontur der Flanschkerbe 123 bildet, wie in der Fig. 3b für die oberste gehäuseseitige Steuerkante $121_1$ und die "oberste" kolbenseitige Steuerkante $122_1$ sowie für die benachbarte gehäuseseitige Steuerkante $121_2$ und die durch die Flanschkerbe 123 gebildete Steuerkante $122_4$ dargestellt.

Es sei von einer Betriebssituation der Blechschere 10 ausgegangen, in der sich das Obermesser 17 nach oben bewegt, d.h. das Hauptsteuerventil 73 die in der Fig. 3a dargestellte Funktionsstellung I einnimmt; dies ist der Fall, wenn das Pilotventil 83 in seine Grundstellung 0 geschaltet ist und das Umschaltventil 84 durch Erregung seines Steuermagneten 124 in seine Schaltstellung I geschaltet ist. Der x-Steueranschluß 86 des Hauptsteuerventils 73 ist dann über das Umschaltventil 84 mit dem Steuerausgang 126 des Pilotventils 83 verbunden, der in der Grundstellung 0 des Pilotventils 83 mit dem drucklosen Vorratsbehälter 66 des Druckversorgungsaggregats 62 verbunden, gegen den P-Druckversorgungsanschluß 127 des Pilotventis 83 jedoch abgesperrt ist. Dies hat zur Folge, daß die untere Steuerkammer 82 drukkentlastet ist und der Ventilkolben 76 durch den in der oberen Steuerkammer 87 herrschenden Speicherdruck in seine untere Endstellung gedrängt ist. Von dieser Situation ausgehend wird die in der Fig. 3b dargestellte Mittelstellung des Hauptsteuerventilkolbens 76 dadurch erreicht, daß ein mit dem Obermesser 17 fest verbundener und dessen Bewegungen mit ausführender Kopieranschlag 128 in Berührungskontakt mit der unteren freien Endstirnfläche 129 des stößelförmigen Kolbenfortsatzes 94 gelangt und dadurch den Ventilkolben 76 im Verlauf der weiteren Aufwärtsbewegung nach oben schiebt, bis nach Durchlaufen des aufwärts gerichteten Teilhubes des Betrages $\Delta h_1$ die in der Fig. 3b dargestellte Position des Hauptsteuerventilkolbens 76 erreicht wird. Bis dahin steht der B-Ringraum 104 mit dem P-Ringraum 106, in den der Ausgangsdruck der Konstantpumpe 69 eingekoppelt ist, mit großem Überströmquerschnitt in kommunizierender Verbindung. Der A-Ringraum 102 ist jedoch "schon" mit 0-Überdeckung der oberen gehäuseseitigen Steuerkante $121_1$ und der oberen Steuerkante $122_1$, die durch eine Flanschkerbe 123 gebildet ist, gegen den oberen, drucklos gehaltenen Anschlußraum 99 abgesperrt, und der A-Ringraum 102 ist "noch" mit 0-Überdeckung seiner gehäuseseitigen unteren Steuerkante $121_2$ mit der durch eine Flanschkerbe 123 gebildeten unteren Steuerkante $122_4$ des A-Sperrflansches 119 gegen den P-Ringraum 106 abgesperrt.

Wird der Kolben 76 des Hauptsteuerventils 73 durch die Aufwärtsbewegung des Obermessers 17 um mehr als den Teilhub $\Delta h_1$ nach oben verschoben, gelangt der A-Ringraum 102 in kommunizierende Verbindung mit dem P-Ringraum 106, wobei dessen kommunizierende Verbindung mit dem B-Ringraum 104 erhalten bleibt. Unter der Wirkung des nunmehr auch in den oberen Antriebsdruckraum 49 des größeren Hydrozylinders 27 eingekoppelten Betriebsdruckes, der von der Konstantpumpe 63 erzeugt wird, werden nunmehr die Kolben 42 und 43 der Antriebs-Hydrozylinder die jetzt im Differentialbetrieb arbeiten, wieder nach unten verschoben, wodurch sich auch der an dem Kopieranschlag 128 abgestützte Hauptsteuerventilkolben 76 nach unten bewegt, bis wieder ab Erreichen der in der Fig. 3b dargestellten Mittelstellung des Ventilkolbens 76 diejenigen Wege-Konfiguration der Strömungspfade des Hauptsteuerventils erreicht wird, die dem Rückzug-Betrieb des Obermessers 17 zugeordnet ist. Die in der Fig. 3b dargestellte Mittelposition des Hauptsteuerventilkolbens 76 ist somit eine selbsttätig eingeregelte Kolben-Position, auf die der obere Totpunkt der Obermesser-Bewegung gleichsam kopiert ist.

Sowohl in der Kopierstellung (Fig. 3b) als auch in dieser Stellung benachbarten Stellungen, die - begrenzten - Auslenkungen des Kolbens 76 nach oben oder unten entsprechen, besteht innerhalb eines diesbezüglichen Auslenkungsbereiches, der nach unten dadurch begrenzt ist, daß der B-Sperrflansch 114 den B-Ringraum 104 gegen den Speicher-Ringraum 111 absperrt und nach oben dadurch, daß der B-Sperrflansch 114 den P-Ringraum 106 gegen den B-Ringraum 104 und/oder der Speicher-Sperrflansch 117 den Speicher-Ringraum 111 gegen den B-Ringraum 104 absperrt, kommunizierende Verbindung zwischen dem P-Ringraum 106, an den die Konstantpumpe 61 angeschlossen ist und dem Speicher-Ringraum 111, an den der Druckspeicher 88 angeschlossen ist, so daß innerhalb dieses Hub-Bereiches der Druckspeicher 88 aufladbar ist.

Zur Steuerung der Speicher-Ladung ist eine insgesamt mit 131 bezeichnete Speicher-Ladeventilanordnung vorgesehen, mit der Funktion, den Druckspeicher 88 mittels der Konstantpumpe 63 aufzuladen, sobald der Speicherdruck einen unteren Grenzwert unterschreitet und, sobald der Druckspeicher 88 wieder auf einen oberen Grenzwert aufgeladen ist, die Konstantpumpe auf Umlaufbetrieb umzuschalten, der mit einem nur geringen Leistungsverbrauch verknüpft ist.

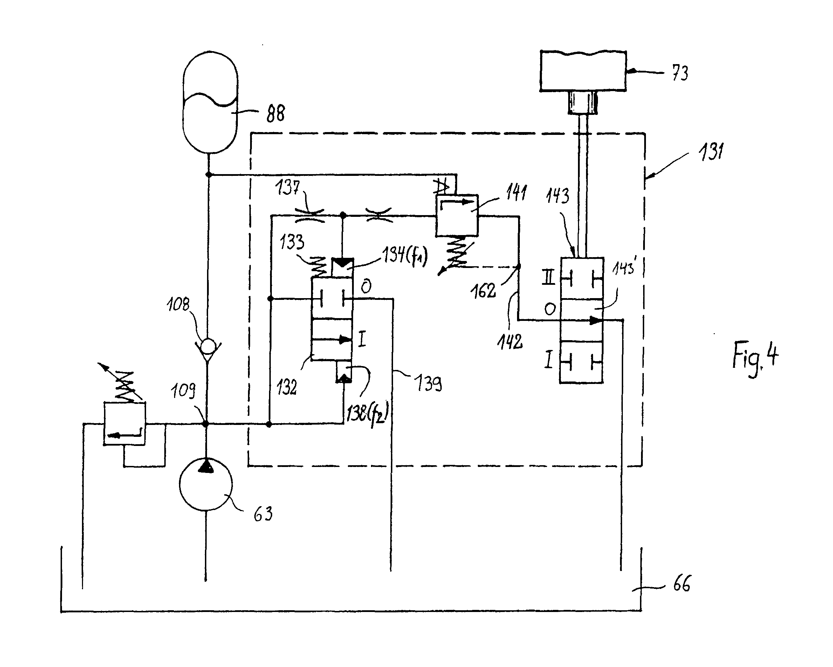

Zur Erläuterung der in der Fig. 2 lediglich durch ein Lade-Ventilsymbol repräsentierten Speicher-Ladeeinrichtung 131 sei nunmehr auch auf deren mehr in die Einzelheiten gehende Darstellung der Fig. 4 verwiesen. Die Speicher-Ladeventilanordnung 131 umfaßt ein druckgesteuertes, als 2/2-Wege-Ventil ausgebildetes Umschaltventil 132, das zum einen durch eine vorgespannte Ventilfeder 133 mit einer Mindestkraft und zum anderen durch einen in eine erste Steuerkammer 134 eingekoppelten Druck in seine sperrende Grundstellung gedrängt wird. Der Druckausgang 109 der Konstantpumpe 63, mittels derer der Druckspeicher 88 über das Ausgangs-Rückschlagventil 108 aufladbar ist, ist zum einen über eine Drossel 137 mit der ersten Steuerkammer 134 verbunden und zum anderen "direkt" an eine zweite Steuerkammer 138 des Umschaltventils 132 angeschlossen, durch deren Druckbeaufschlagung mit dem Ausgangsdruck der Konstantpumpe 63 eine Kraft resultiert, die den Ventilkolben des Umschaltventils 132 in dessen Durchflußstellung I drängt, in der der Druckausgang 109 der Konstantpumpe 63 an eine direkt zum Vorratsbehälter 66 zurückführende Rücklaufleitung 139 angeschlossen ist und die Pumpe 63 im Umlaufbetrieb arbeitet. Die die axial beweglichen Begrenzungen der Steuerkammern 134 und 138 bildenden, nicht dargestellten Endstirnflächen des durch das 2/2-Ventilsymbol repräsentierten Ventilkolbens sind dahingehend aufeinander abgestimmt, daß der Betrag $f_1$ der die axial bewegliche Begrenzung der ersten Steuerkammer 134 bildenden Kolben-Endstirnfläche erheblich größer ist als der Betrag $f_2$, der die axial bewegliche Begrenzung der zweiten Steuerkammer 138 des Umschaltventils 132 bildenden Kolben-Endstirnfläche, wobei ein typischer Wert des Flächenverhältnisses $f_1/f_2$ um 1,4 beträgt.

Des weiteren umfaßt die Speicher-Ladeventilanordnung 131 ein mit dem momentan im Speicher 88 herrschenden Druck angesteuertes, als Vorsteuerventil für das Umschaltventil 132 dienendes Druck-Ventil 141, das seiner Funktion nach ein 2/2-Ventil ist, das, wenn der Speicherdruck einen Maximalwert von z.B. 70bar überschreitet, in seine Durchflußstellung gelangt, in der die großflächig beweglich begrenzte Steuerkammer 134 des Umschaltventils 132 mit einem Entlastungs-Steuerpfad 142 verbunden ist, und das, wenn der Speicherdruck seinen unteren Grenzwert unterschreitet, der z.B. um 10% niedriger ist als der obere Grenzwert, wieder in seine sperrende Grundstellung zurückfällt, in der die erste Steuerkammer 134 wieder gegen den Entlastungs-Steuerpfad 142 abgesperrt ist.

Der Entlastungs-Steuerpfad 142 ist über ein mechanisch gesteuertes Hilfsventil 143 geführt, dessen durch ein 2/3-Wege-Symbol repräsentierter Kolben 143' beidseits einer Mittelstellung, in der kommunizierende Verbindung des Entlastungs-Steuerpfades 142 mit dem drucklosen Vorratsbehälter 66 des Druckversorgungsaggregats 62 besteht, je eine Sperrstellung I beziehungsweise II hat, in der der Entlastungs-Steuerpfad 142 gesperrt ist. Der Kolben 143' des Hilfsventils 143 ist formschlüssig mit dem Kolben 76 des Hauptsteuerventils 73 bewegungsgekoppelt, derart, daß das Hilfsventil 143 seine geöffnete Mittelstellung 0 einnimmt, wenn auch der Kolben 76 des Hauptsteuerventils 73 eine Position innerhalb des für eine Speicherladung geeigneten Hub-Bereiches einnimmt und außerhalb dieses Hub-Bereiches, d.h. in den für den abwärts gerichteten Vorschub- und Schneidbetrieb und in den für den aufwärts gerichteten Rückzugsbetrieb des Obermessers 17 genutzten Funktionsstellungen des Hauptsteuerventilkolbens 76 die jeweilige Sperrstellung I oder II einnimmt.

Zur Erläuterung der Funktion der insoweit erläuterten Speicher-Ladeventilanordnung 131 sei davon ausgegangen, daß der Druckspeicher 88, nachdem ein Schneidvorgang stattgefunden hat, ladebedürftig ist, wobei der Speicherdruck auf einen Wert signifikant unterhalb des unteren Grenzwertes von z.B. 63bar abgefallen ist. Die mit dem oberen End-Stellungsbereich des Obermessers 17 verknüpfte, positionsgeregelte Kopierstellung des Hauptsteuerventilkolbens 76 sei schon erreicht, so daß der Speicher-Ladebetrieb möglich ist. In dieser Ausgangssituation, die unmittelbar auf einen gleichsam stationären Rückzugsbetrieb des Obermessers 17 folgt, befindet sich das Umschaltventil 132 in seiner sperrenden Grundstellung 0, da in seinen beiden Steuerkammern 134 und 138 im wesentlichen derselbe Druck herrscht. Das Vorsteuerventil 141 befindet sich in seiner sperrenden Grundstellung, da der Speicherdruck bei weitem nicht ausreicht, das Vorsteuerventil 141 zu öffnen. Das Hilfsventil 143 nimmt seine Durchflußstellung 0 ein. Die Konstantpumpe 63 lädt über das Ausgangs-Rückschlagventil 108 den Druckspeicher 88 auf, wobei der Ausgangsdruck der Konstantpumpe 63 stetig ansteigt. Das Umschaltventil 132 bleibt in seiner sperrenden Grundstellung, da der in die großflächig begrenzte Steuerkammer 134 eingekoppelte Druck allenfalls geringfügig niedriger ist als der in die kleinflächig begrenzte Steuerkammer 138 eingekoppelte Ausgangsdruck der Konstantpumpe, da die zwischen der großflächig begrenzten Steuerkammer 134 und dem Druckausgang 136 der Konstantpumpe liegende Drossel in diesem Betriebszustand keinen nennenswerten Druckabfall verursachen kann, durch das Flächenverhältnis f1/f2 jedoch sichergestellt ist, daß das Umschaltventil 132 in seiner Sperrstellung bleibt.

Mit dem Erreichen des oberen Druck-Grenzwertes von z.B. 70bar, auf den der Speicher 88 aufladbar sein soll, öffnet das Vorsteuerventil 141, so daß nunmehr ein Hydraulikölstrom vom Druckausgang 109 der Konstantpumpe 63 über die Drossel 137, das geöffnete Vorsteuerventil 141 und den durch das Hilfsventil 143 freigegebenen Entlastungs-Steuerpfad 142 zum drucklosen Vorratsbehälter 66 hin abströmen kann, wobei der Ausgangsdruck der Pumpe im wesentlichen über der Drossel 137 abfällt, mit der Folge, daß auch in der großflächig begrenzten, ersten Steuerkammer 134 nur noch ein Druck herrscht, der, bedingt durch den als gering voraussetzbaren Strömungswiderstand des der Drossel 137 nachgeschalteten Entlastungs-Strömungspfades, der das Vorsteuerventil 141, den Entlastungs-Steuerpfad 142 und das Hilfsventil 143 umfaßt, nur geringfügig über dem Umgebungsdruck-Niveau liegt, auf dem sich der Vorratsbehälter 66 befindet. Auch der in die kleinflächig begrenzte, zweite Steuerkammer 138 eingekoppelte Ausgangsdruck der Konstantpumpe 63 fällt unter den Betrag des im Speicher 88 herrschenden Druckes ab, bleibt jedoch, eine geeignete Auslegung der "Bypass"-Drossel 137 vorausgesetzt, hinreichend hoch, daß das Umschaltventil in seine Durchflußstellung I umgeschaltet wird, in der ein weitaus überwiegender Teil des Hydrauliköl-Ausgangsstromes der Konstantpumpe 63 über das Umschaltventil 132 und die Rücklaufleitung 139 zurück zum Vorratsbehälter 66 abströmt, d.h. die Konstantpumpe 63 mit nur geringer Verlustleistung im Umlaufbetrieb arbeitet.

In einem Schneidbetrieb der Blechschere 10, in dem sich Schneidvorgänge periodisch wiederholen, wobei während der Aufwärtsbewegung des Obermessers 17, sobald dessen Schneidkanten-Überlappung mit der Schneidkante 16 des Untermessers 14 aufgehoben und ein abgeschnittener Blechstreifen freigegeben ist, die Blechbahn 11 mittels einer nicht dargestellten Transporteinrichtung wieder in die für einen nachfolgenden Schnitt vorgesehene Position gebracht wird, wird in aller Regel ein einziger Speicher-Ladevorgang der anhand der Fig. 4 geschilderten Art ausreichen, um den Druckspeicher 88 wieder so weit aufzuladen, daß dessen Energieinhalt ausreicht, um in Vorbereitung des nachfolgenden Schneidvorganges die Niederhalter 23 mit hinreichender Haltekraft an die Blechbahn 11 anlegen zu können, um diese in der Schneid-Position sicher zu fixieren.

Das Hilfsventil 143, das in Aufwärts-Bewegungsphasen sowie in Abwärts-Bewegungsphasen des Obermessers 17 seine Sperrstellung I beziehungsweise II einnimmt und dadurch in diesen Bewegungsphasen einen Speicher-Ladebetrieb verhindert, so daß die gesamte, von der Konstantpumpe 63 geförderte Ölmenge für die Bewegungs-Steuerung der Antriebs-Hydrozylinder 27 und 28 zur Verfügung steht, ist in das Hauptsteuerventil 73 integriert. Zu diesem Zweck ist auch im Bereich des unteren Endabschnittes $116_5$ der axial durchgehenden Ventilbohrung 116, der sich zwischen dem Speicher-Ringraum 111 und der unteren Steuerkammer 82 des Hauptsteuerventils erstreckt, eine einen Teil des Entlastungssteuerpfades 142 (Fig. 4) bildende $x_1$-Ringnut 144 vorgesehen, die mit einem $x_1$-Steueranschluß 146 des mittleren Gehäuseblocks 81 des Ventilgehäuses 77 in kommunizierender Verbindung steht. Der untere Kolbenabschnitt 93, der in dem unteren Endabschnitt $116_5$ der durchgehenden Ventilbohrung 116 druckdicht verschiebbar geführt ist und gegenüber dem Speicher-Sperrflansch 117 durch einen kolbenstangenförmigen Abschnitt 145 kleineren Durchmessers abgesetzt ist, ist mit einer "radialen" Fensteröffnung 147 versehen, die bei dem dargestellten Erläuterungsbeispiel mit einer innerhalb des unteren Kolbenabschnitts 93 endenden, den Hauptsteuerventilkolben 76 einschließlich seines oberen Endflansches 91 im übrigen axial durchsetzenden, zentralen Kolbenbohrung 148 in kommunizierender Verbindung steht, die ihrerseits in jeder der möglichen Kolbenpositionen mit dem oberen Anschlußraum 99 des Hauptsteuerventils 73 kommuniziert, der über den T-Versorgungsanschluß 101 des Hauptsteuerventils 73 "direkt" mit dem drucklosen Vorratsbehälter 66 des Druckversorgungsaggregats 62 verbunden ist.

Durch den gemäß den Darstellungen der Figuren 3a bis 3c oberen Rand der Fensteröffnung 147 sowie deren unteren Rand sind eine obere kolbenseitige Steuerkante 149 und eine untere kolbenseitige Steuerkante 151 gebildet, die in zueinander parallelen Ebenen 152 (Fig. 3a) beziehungsweise 153 (Fig. 3c) verlaufen, die ihrerseits parallel zu den Ebenen 154 und 156 (Fig. 3c) sind, die durch die obere Nutwange 157 und die untere Nutwange 158 der $x_1$-Ringnut 144 markiert sind, die je über eine obere, kreisförmige, gehäuseseitige Steuerkante 159 beziehungsweise eine untere, kreisförmige, gehäuseseitige Steuerkante 161 an den unteren Endabschnitt $116_5$ der zentralen Gehäusebohrung 116 anschließen (Fig. 3a).

Der axiale Abstand der durch die Fensteröffnung 147 gebildeten, kolbenseitigen Steuerkanten, die axiale lichte Weite der $x_1$-Ringnut 144, durch die der axiale Abstand der durch diese Ringnut gebildeten gehäusefesten Steuerkanten 159 und 161 festgelegt ist, sowie die Anomdung dieser $x_1$-Ringnut 144 zwischen dem Speicher-Ringraum 111 und der unteren Steuerkammer 82 des Hauptsteuerventils 73 sind dahingehend aufeinander abgestimmt, daß in der unteren Endstellung des Hauptsteuerventilkolbens 76, mit der die Wege-Konfiguration für die Aufwärts-Bewegung des Obermessers 17 verknüpft ist, die Fensteröffnung 147 des Kolbens signifikant unterhalb der $x_1$-Ringnut 144 angeordnet ist, d.h positive Überdeckung zwischen der unteren, gehäuseseitigen Steuerkante 161 der Ringnut 144 und der oberen hierzu parallelen Steuerkante 149 des Kolbenfensters 147 besteht (Fig. 3a), und daß in der oberen Endstellung (Fig. 3c) des Hauptsteuerventilkolbens 76, der die dem Vorschub- und Schneidbetrieb des Obermessers 17 zugeordnete Konfiguration der Ventilwege entspricht, die Fensteröffnung 147 des Hauptsteuerventilkolbens 76 in signifikantem Abstand von der $x_1$-Ringnut 144 oberhalb derselben angeordnet ist, d.h. positive Überdeckung zwischen der oberen, durch die Ringnut 144 gebildeten gehäuseseitigen Steuerkante 159 und der unteren durch die Fensteröffnung 147 gebildeten, kolbenseitigen Steuerkante 151 gegeben ist, so daß, von jeder der beiden Endstellungen I und II aus gesehen, ein auf- oder abwärts gerichteter Mindesthub des Hauptsteuerventilkolbens 76 erforderlich ist, um die Fensteröffnung 147 in kommunizierende Verbindung mit der $x_1$-Ringnut 144 zu bringen, d.h. kommunizierende Verbindung zwischen dem drucklosen Vorratsbehälter 66 und dem Ausgang 162 des Vorsteuerventils 141 der Speicher-Ladeventilanordnung 131 herzustellen, wie es für den Speicher-Ladebetrieb erforderlich ist. Der Hub-Bereich innerhalb dessen ein Speicher-Ladebetrieb möglich ist, d.h. das Hilfsventil 143 seine Offen-Stellung 0 einnimmt, entspricht somit dem Betrag der axialen lichten Weite der Fensteröffnung 147 zuzüglich der lichten Weite w der $x_1$-Ringnut 144 und hat in der zur Erläuterung gewählten Gestaltung des Hauptsteuerventils 73 und des Hilfsventils 143, die den maßstäblichen Darstellungen der Figuren 3a, 3b und 3c entspricht, einen Wert von 8mm, wobei die axiale lichte Weite der Fensteröffnung 147 der axialen lichten Weite w der $x_1$-Ringnut 144 entspricht. Der Gesamthub des Hauptsteuerventilkolbens 76, der sich aus dem von der unteren Endstellung bis in die Mittelstellung führenden unteren Teilhub $\Delta h_1$ und dem aus der Mittelstellung bis in die obere Endstellung führenden, oberen Teilhub $\Delta h_2$ zusammensetzt, hat einen Wert von 11,5mm, wobei auf den "unteren" Teilhub $\Delta h_1$ bei dem zur Erläuterung gewählten Ausführungsbeispiel 7mm entfallen. Die ringförmige Steuerfläche 92 des Hauptsteuerventilkolbens 76, auf die der in die untere Steuerkammer 82 einkoppelbare Steuerdruck $p_x$ wirkt, hat bei dem zur Erläuterung gewählten Ausführungsbeispiel einen Betrag von $0,53cm^2$, und die wirksame Querschnittsfläche des Betätigungsstößels 89, auf die der permanent in die obere Steuerkammer 87 des Hauptsteuerventils 73 eingekoppelte Speicherdruck wirkt, hat einen Betrag von $0,28cm^2$.

Während des Ladebetriebs des Druckspeichers 88 sind die Niederhalter 29 druckentlastet, wobei ihre Antriebsdruckräume 34 über einen "gedrosselten" Strömungskanal 163 eines Auslaßventils 164 und einen in der Grundstellung 0 des Pilotventils 83 freigegebenen Entlastungspfad 166 mit dem drucklosen Vorratsbehälter 66 in kommunizierender Verbindung stehen und mittels eines in seiner Sperrstellung gehaltenen Einlaßventils 167 gegen den Druckspeicher 88 abgesperrt sind.

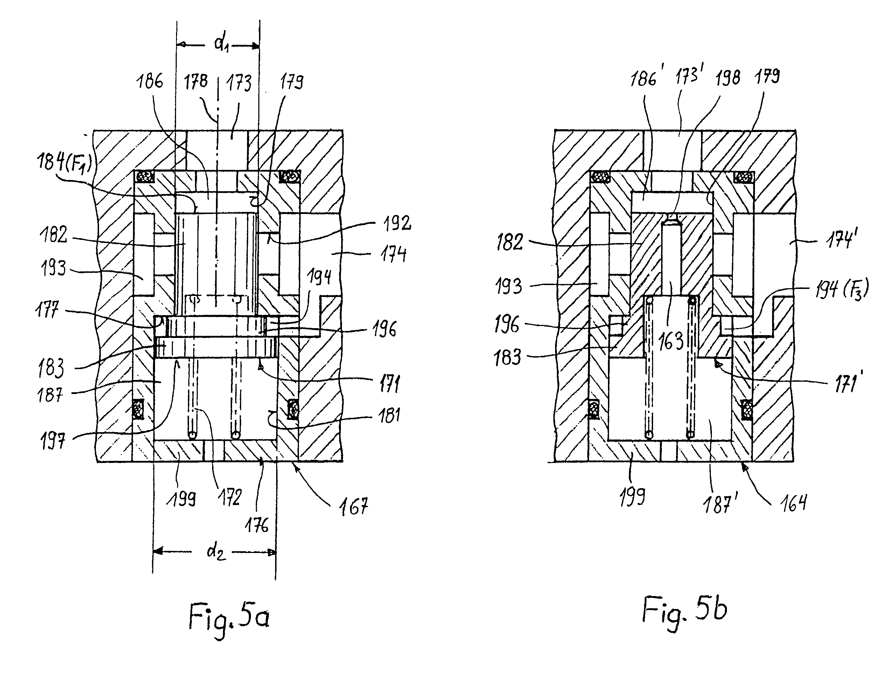

Das Einlaßventil 167, zu dessen Erläuterung auch auf die Fig. 5a bezug genommen sei, ist als druckgesteuertes 2/2-Wege-Ventil ausgebildet, auf dessen insgesamt mit 171 bezeichneten Kolben die Kraft einer schwach vorgespannten Ventilfeder 172 wirkt, die den Kolben 171 in seine dem sperrenden Zustand des Ventils 167 entsprechende, dargestellte, "obere" Endstellung drängt, in der ein Speicheranschluß 173 des Ventils 167 gegen dessen Niederhalter-Anschluß 174 abgesperrt ist. Das Ventilgehäuse 176 hat zwei über eine radiale Innenschulter 177 ineinander übergehende, bezüglich der zentralen Längsachse 178 koaxiale Bohrungsstufen 179 und 181 unterschiedlichen Durchmessers $d_1$ beziehungsweise $d_2$, in denen der Kolben 171, der seinerseits als Stufenkolben ausgebildet ist, mit Kolbenstufen 182 beziehungsweise 183 entsprechend verschiedener Durchmesser $d_1$ und $d_2$ druckdicht verschiebbar geführt ist. Die dem Durchmesser nach kleinere Kolbenstufe 182 bildet mit ihrer freien Endstirnfläche 184 des Betrages $F_1$ die axial bewegliche Begrenzung einer speicherseitigen, "oberen" Steuerkammer 186, die mit dem Speicheranschluß 173 in kommunizierender Verbindung steht.

Die dem Durchmesser nach größere Kolbenstufe 183 bildet die axial bewegliche Begrenzung einer "unteren", pumpenseitigen Steuerkammer 187, die über ein Eingangs-Rückschlagventil 188 und eine Drosselblende 189 an die vom Ausgangs-Rückschlagventil 108 des Druckversorgungsaggregats 62 zum P-Versorgungsanschluß 107 des Hauptsteuerventils führende P-Druckversorgungsleitung 191 angeschlossen ist, wobei die Drosselblende 189 zwischen der P-Druckversorgungsleitung 191 und dem Eingangs-Rückschlagventil 188 angeordnet ist. Innerhalb eines mittleren Bereiches desjenigen Gehäuseteils, das von der dem Durchmesser nach kleineren Bohrungsstufe 179 durchsetzt ist, hat das Ventilgehäuse 176 eine Querbohrung 192, die radial außen in einen Ringraum 193 des Ventilgehäuses mündet, mit dem der Niederhalter-Anschluß 174 in kommunizierender Verbindung steht. Mit dem Niederhalter-Anschluß 174 beziehungsweise der Querbohrung 192 ist auch ein "unterer" Ringraum 194 variabler axialer Ausdehnung kommunizierend verbunden, der axial bewglich durch die flanschförmig gestaltete Kolbenstufe 183 des größeren Durchmessers $d_2$ begrenzt ist, wobei zwischen der flanschförmigen Kolbenstufe 183 und der längergestreckten zylindrischen Kolbenstufe 182 des kleineren Durchmessers $d_1$ eine Anschlagstufe 196 vorgesehen ist, durch deren Anlage an der Ringschulter 177 des Gehäuses die obere Endstellung des Kolbens 171 markiert ist, in der der Ventilkolben 171 so weit in den oberen Teil der die speicherseitige Steuerkammer 186 gehäusefest begrenzenden Bohrungsstufe 179 eingetaucht ist, daß die obere Steuerkammer 186 hermetisch dicht gegen die Querbohrung 192 abgesperrt ist.

In der unteren Endstellung des Kolbens 171, die durch Anlage eines unteren Kolbenflansches 183 an der "unteren" Stirnwand 199 des Ventilgehäuses 176 oder die Block-Stellung der Ventilfeder 172 markiert ist, oder in einer dieser unteren Stellung nahen Position des Kolbens 171, ist die stangenseitige, zylindrische Kolbenstufe 182 so weit nach unten verschoben, daß ihre freie Endstirnfläche 184 unterhalb der Querbohrung 192 verläuft und diese mit ihrem gesamten lichten Querschnitt freigegeben ist, so daß ein maximaler Wert des Überstromquerschnittes des vom Druckspeicher 88 über den Speicheranschluß 173 des Einlaßventils 167, den oberen Abschnitt der oberen Bohrungsstufe 179 und die Querbohrung zum Niederhalteranschluß 174 führenden Strömungspfades gegeben ist, über den Hydrauliköl aus dem Speicher 88 in die Niederhalter 29 überströmen kann, die dadurch sehr rasch in Anlage mit der zu fixierenden Blechbahn 11 gedrängt werden.

Die hierfür erforderliche Abwärtsbewegung des Einlaßventilkolbens 171 erfordert eine Druckentlastung der unteren Steuerkammer 187 des Einlaßventils 167 um mehr als den der Schließkraft der Ventilfeder 172 äquivalenten "Schließ"-Druck derselben unterhalb des auf die obere freie Stirnfläche 184 des zylindrischen Kolbenstufe 182 und innerhalb des Ringraumes 194 wirkenden Druckes, da die Summe des Betrages $F_1$ der oberen Endstirnfläche 184 und des effektiven Betrages $F_3$ der den Ringraum 194 axial beweglich begrenzenden Ringfläche gleich dem Betrag des effektiven Wertes $F_2$ der unteren Begrenzungsfläche 197 der flanschförmigen Kolbenstufe 183 ist, auf die der in der unteren Steuerkammer 187 des Einlaßventils 167 herrschende Druck wirkt.

Das Auslaßventil 164 ist zu dem Zweck vorgesehen, eine raschest-mögliche Druckentlastung der Antriebsdruckräume 34 der Niederhalter 29 zu ermöglichen, wenn diese nach Ausführung eines Schneidhubes des Obermessers 17 durch Einfahren der Kolbenstangen 39 der Niederhalter gelöst werden müssen. Das Auslaßventil 164 ist, wie seiner Detaildarstellung der Fig. 5b unmittelbar entnehmbar ist, im wesentlichen baugleich mit dem Einlaßventil 167 (Fig. 5a) ausgeführt und unterscheidet sich von diesem konstruktiv lediglich dadurch, daß sein Kolben 171' eine axial durchgehende, zentrale Bohrung 163 hat, die in der dargestellten, oberen Endstellung des Ventilkolbens 171' die obere Steuerkammer 186' mit der unteren Steuerkammer 187' des Auslaßventils 164 kommunizierend verbindet. Die zentrale Bohrung 163 ist an ihrem einen, gemäß der Darstellung oberen Ende mit einer Drosselblende 198 versehen, die im wesentlichen den Strömungswiderstand des sich zwischen der oberen Steuerkammer 186' und der unteren Steuerkammer 187' erstreckenden Strömungskanals bestimmt.

Soweit Elemente des in der Fig. 5b dargestellten Auslaßventils 164 mit Bezugszeichen belegt sind, die auch für Elemente des Einlaßventils gemäß Fig. 5a verwendet sind, soll dies den Hinweis auf deren identische Gestaltung und auch den Verweis auf ihre anhand der Beschreibung des Einlaßventils 167 gemäß Fig. 5a schon erfolgte Beschreibung beinhalten, um Wiederholungen zu vermeiden.

Das Auslaßventil 164 ist in die elektrohydraulische Steuereinheit 72 wie folgt eingefügt: Der in die kleinere Bohrungsstufe 179 mündende Ventileingang 173' des Auslaßventils 164 ist "direkt" mit den Antriebsdruckräumen 34 der Niederhalter 29 verbunden. Der mit dem Ringraum 194 der lichten Querschnittsfläche $F_3$ ständig kommunizierende Ventilanschluß 174' bildet den Ausgang des Auslaßventils 164, der zum einen über eine Rücklaufleitung 201 "direkt" mit dem drucklosen Vorratsbehälter 66 des Druckversorgungsaggregats 62 verbunden ist und zum anderen über eine Drosselblende 202 mit einem zweiten Steueranschluß 203 des Pilotventils 83 verbunden ist, der sowohl in der federzentrierten Grundstellung 0 des Pilotventils 83 als auch in dessen dem Abwärts-Vorschub- und dem Schneidbetrieb zugeordneten Funktionsstellung I über einen zusätzlichen Strömungspfad 204 mit dem drucklosen Vorratsbehälter 66 des Druckversorgungsaggregats 62 verbunden ist. Die untere Steuerkammer 187' des Auslaßventils 164 steht über einen x-Verbindungskanal 206 mit dem x-Steuerausgang 126 des Pilotventils 83 in kommunizierender Verbindung.

Zwischen das Eingangsrückschlagventil 188, über das die pumpenseitige Steuerkammer 187 des Einlaßventils 167 an die P-Druckversorgungsleitung 191 angeschlossen ist, und den P-Druckversorungsanschluß 127 des Pilotventils 83 ist ein Druckminderventil 207 der elektrohydraulischen Steuereinheit 72 geschaltet, das den am P-Druckversorgungsanschluß 127 des Pilotventils 83 entstehenden Druck auf einen Wert begrenzt, der signifikant höher sein kann als der Ausgangsdruck des Speichers 88. Dadurch ist es möglich, daß in der dem Schneidbetrieb zugeordneten Funktionsstellung I des Pilotventils 83, in der der P-Druckversorgungsanschluß 127 des Pilotventils mit dem x-Steuerausgang 126 des Pilotventils verbunden und gegen den zweiten Steueranschluß 203 sowie den T-Rücklaufanschluß 208 des Pilotventils 83 abgesperrt, dieser jedoch mit dem zweiten Steueranschluß 203 des Pilotventils 83 verbunden ist, über die Drosselblende 198 des Kolbens 171' des Auslaßventils 164 in die Antriebsdruckräume 34 der Niederhalter 29 ein Druck einkoppelbar ist, der höher ist als der Ausgangsdruck des Speichers 88, d.h. die Haltekraft der Niederhalter 29 signifikant über denjenigen Betrag hinaus erhöht werden kann, mit dem sie zunächst an den Blechstreifen 11 angelegt werden.

Diese Möglichkeit ist insbesondere dann von Bedeutung, wenn hohe Schneidkräfte und demgemäß auch hohe Halte-Kräfte erforderlich sind. Die Erzeugung hoher Vorschubkräfte mittels der Antriebs-Hydrozylinder 27 und 28, die zumindest in einer anfänglichen Phase des Vorschub-Betriebes des Obermessers 17 als Differentialzylinder arbeiten, wird durch ein Flächen-Umschaltventil 209 der elektrohydraulischen Steuereinheit 72 ermöglicht, das zwischen den B-Verbraucheranschluß 113 und den P-Versorgungsanschluß 107 des Hauptsteuerventils geschaltet ist. Das Flächenumschaltventil ist als druckgesteuertes 3/2-Wegeventil ausgebildet, das durch die Vorspannung einer Ventilfeder 210 in seine Grundstellung 0 gedrängt wird, in der ein Durchflußpfad 211 des Flächenumschaltventils 209 freigegeben ist, über den der B-Verbraucheranschluß 113 des Hauptsteuerventils 73, an den der stangenseitige Antriebsdruckraum des kleineren Hydrozylinders 28 angeschlossen ist, mit dem P-Versorgungsanschluß 107 verbunden ist. Gleichsinnig mit der Ventilfeder 210 wirkt die Kraft, die durch Druckeinkopplung in eine erste Steuerkammer 212 des Flächenumschaltventils 209 auf dessen durch das 3/2-Wege-Ventilsymbol repräsentierten Kolben ausgeübt wird. Diese erste Steuerkammer 212 ist über eine Steuerleitung 213 mit dem B-Verbraucheranschluß 113 des Hauptsteuerventils 73 verbunden. Durch Druckeinkopplung in eine zweite Steuerkammer 214 des Flächenumschaltventils 209, die über eine weitere Steuerleitung 216 mit dem A-Verbraucheranschluß 103 des Hauptsteuerventils 73 verbunden ist, wobei die die axial bewegliche Begrenzung der zweiten Steuerkammer 214 bildende Endstirnfläche des Ventilkolbens dem Betrage nach größer ist als diejenige Endstirnfläche, welche die axial bewegliche Begrenzung der ersten Steuerkammer 212 bildet, ist der Ventilkolben des Flächenumschaltventils 209 in die Schaltstellung I des Flächenumschaltventils verschiebbar, in der ein Durchflußpfad 217 freigegeben ist, der den B-Verbraucheranschluß 113 "direkt" mit dem drucklosen Vorratsbehälter 66 des Druckversorgungsaggregats 62 verbindet.

Das Flächen-Umschaltventil 209 ist in Abstimmung mit den Antriebs-Hydrozylindem 27 und 28 dahingehend ausgelegt, daß es bei einem Überschreiten eines Schwellenwertes $p_{US}$ des in den bodenseitigen Antriebsdruckraum 49 des größeren Antriebshydrozylinders 27 eingekoppelten Betriebsdruckes aus seiner Grundstellung 0, in der der stangenseitige Antriebsdruckraum 53 des kleineren Antriebshydrozylinders mit dem p-Versorgungsanschluß 107 des Hauptsteuerventils verbunden ist, in seine Schaltstellung I gelangt, in der der stangenseitige Antriebsdruckraum 53 des kleineren Antriebshydrozylinders 28 mit dem drucklosen Vorratsbehälter 66 verbunden ist; das Flächenumschaltventil 209 wird hiemach erst dann wieder in seine Grundstellung zurückgeschaltet, wenn der im bodenseitigen Antriebsdruckraum 49 des größeren Antriebszylinders herrschenden Druck einen Schwellenwert $p_R$ unterschreitet, der durch die Beziehung

$$P_R = P_{US} \left( \frac{F_1 - F_3}{F_1} - a \right)$$

gegeben ist. In dieser Beziehung ist mit $F_3$ die dem Druck im stangenseitigen Antriebsdruckraum 53 des kleineren Antriebshydrozylinders 28 ausgesetzte Ringfläche seines Kolbens 43, mit $F_1$ die dem Druck im bodenseitigen Antriebsdruckraum 49 des größeren Antriebszylinders 27 ausgesetzte Kreisfläche seines Kolbens 42 und mit a eine Konstante bezeichnet, die vorzugsweise einen Wert um 0,1 hat. Hierdurch wird sichergestellt, daß das Flächenumschaltventil 209 seine Schaltstellung I beibehält, solange der erhöhte Kraft-Bedarf besteht.

Das Flächen-Umschaltventil 209 kann, abweichend von der Darstellung als druckgesteuertes Ventil auch als elektrisch ansteuerbares Ventil ausgebildet sein, das in Abhängigkeit von sensierten Werten des Betriebsdruckes ansteuerbar ist, wobei ein typischer Schwellenwert $p_R$ des Betriebsdruckes, bei dem das Flächen-Umschaltventil in seine Schaltstellung I umschaltet, etwa 220bar beträgt.

Zur Erläuterung eines automatisch ablaufenden Schneidbetriebes der Blechschere 10 sei davon ausgegangen, daß der Speicher-Ladevorgang abgeschlossen und der Druckspeicher 88 auf einen Soll-Druck von z.B. 70bar aufgeladen ist. Die Pumpe 63 arbeitet im Umlaufbetrieb und der Kolben 76 des Hauptsteuerventils 73 nimmt die in der Fig. 3b dargestellte Kopierstellung ein. Die untere Steuerkammer 82 des Hauptsteuerventils 73 ist über eine zwischen den x-Steueranschluß 86 der unteren Steuerkammer und das Umschaltventil 84 geschaltete Drosselblende 168 und einen in der Grundstellung 0 des Umschaltventils 84 freigegebenen Durchflußpfad 169 mit dem drucklosen Vorratsbehälter 66 des Druckversorgungsaggregats 62 verbunden und dadurch druckentlastet.

Das Obermesser 17 befindet sich in seiner geregelten, d.h. innerhalb einer geringfügigen Schwankungsbreite variierenden oberen Endstellung. Die Niederhalter 29 sind eingefahren. Das Einlaßventil 167 ist gesperrt, da in seine untere Steuerkammer 187 der Ausgangsdruck des Speichers 88 über das Hauptsteuerventil 73 eingekoppelt ist, so daß die Ventilfeder 172 das Einlaßventil 167 in seiner Sperrstellung zu halten vermag. Das Auslaßventil 164 ist ebenfalls gesperrt, da sowohl seine obere als auch seine untere Steuerkammer sich auf dem Druckniveau des Vorratsbehälters 66 befinden und daher die Schließkraft der Ventilfeder 172 ausreicht, das Auslaßventil 164 in seiner Sperrstellung zu halten. Das Pilotventil 83 nimmt seine durch zwei in entgegengesetzter Richtung wirksame Ventilfedern 218 und 219 zentrierte Grundstellung ein, die dem Aufwärts-Fahrbetrieb des Obermessers 17 und dem Speicher-Ladebetrieb in der OT-Stellung zugeordnet ist.

Um von diesem "stationären" Betriebszustand der Blechschere 10 ausgehend einen Schneidzyklus einzuleiten, wird das Pilotventil 83, das als elektrisch steuerbares Magnetventil ausgebildet ist, in seine Schaltstellung I umgeschaltet, in der sein P-Druckversorgungsanschluß 127 mit seinem x-Steuerausgang 126 kommunizierend verbunden, der dadurch freigegebene Strömungspfad 221 jedoch gegen einen ebenfalls freigegebenen Entlastungsströmungspfad 222 abgesperrt ist, der auch in der Funktionsstellung I des Pilotventils 83 die dem Entlastungspfad 166, der in der Grundstellung 0 des Pilotventils 83 freigegeben ist, entsprechende Verbindung zwischen dem drucklosen Vorratsbehälter 66 und der Rücklaufleitung 201 beziehungsweise dem Ausgangsventilanschluß 174' des Auslaßventils 164 freihält. Über den in der Schaltstellung I des Pilotventils zwischen dessen Druckversorgungsanschluß 127 und dessen x-Ausgang 126 freigegebenen Strömungspfad ist die untere Steuerkammer 187 des Einlaßventils 167 in komminizerende Verbindung mit der unteren Steuerkammer 187' des Auslaßventils 164 gelangt, die über die Drosselblende 198 des Kolbens 171' mit den Antriebsdruckräumen 34 der Niederhalter 29 in kommunizierender Verbindung steht, mit der Folge, daß in der unteren Steuerkammer 187 des Einlaßventils 167 ein Druckabfall eintritt und dieses in seine Offen-Stellung gelangt, in der Hydrauliköl vom Speicher 88 über den vom Speicheranschluß 173 zum Niederhalter-Anschluß 174 führenden, durch die Druckentlastung freigegebenen Strömungspfad großen Querschnitts strömt. Das Ergebnis der Freigabe dieses Strömungspfades ist, daß die Niederhalter 29 "rasch" angelegt werden, da aus dem Speicher 88 genügend Hydrauliköl, das unter hinreichendem Druck steht, zur Verfügung gehalten ist.

Geringfügig verzögert gegenüber dem Umschalten des Pilotventils 83 in dessen Funktionsstellung I wird das Umschaltventil 84 in dessen Funktionsstellung I umgeschaltet und dadurch über einen nunmehr freigegebenen Durchflußpfad 223 des Umschaltventils 84 der x-Steuerausgang 126 des Pilotventils 83 mit dem x-Steueranschluß 86 des Hauptsteuerventils 73 verbunden. Die Folge hiervon ist, daß der am x-Steuerausgang 126 des Pilotventils 83 anstehende Druck, der, solange sich das Hauptsteuerventil "noch" in seiner in der Fig. 3b dargestellten Kopierstellung oder in einer der damit verknüpften Wege-Konfiguration entsprechenden Stellung 0 befindet, dem momentanen Ausgangsdruck des Speichers 88 entspricht, der über die in dieser Funktionsstellung des Hauptsteuerventils 73 bestehende Verbindung zwischen dem Speicherringraum 111 und dem B-Ringraum 104, den in der Grundstellung des Flächenumschaltventils 209 freigegebenen Durchflußpfad 211, das Eingangsrückschlagventil 188, das Druckbegrenzungsventil 207, den Durchflußpfad 221 des Pilotventils 83 und den Durchflußpfad 223 des Umschaltventils 84 sowie über die Drosselblende 168 in die untere Steuerkammer 82 des Hauptsteuerventils 73 eingekoppelt ist. Hierdurch gelangt der Kolben 76 des Hauptsteuerventils 73 in die in der Fig. 3c dargestellte "obere" Endstellung, in der das Hilfsventil 143 seine "obere" Sperrstellung II einnimmt. In dieser Funktionsstellung ist der von der Konstantpumpe 63 über die Drossel 137 (Fig. 4) und das Druckbegrenzungsventil 141 der Speicher-Ladeventilanordnung 131 führende Entlastungs-Strömungspfad gesperrt, so daß über der Drossel 137 ein Druckabfall nicht mehr auftreten kann, wodurch der Druck in der ersten Steuerkammer 134 des druckgesteuerten Umschaltventils 132 ansteigt und dieses Umschaltventil 132 der Speicher-Ladeventilanordnung wieder in seine Sperrstellung 0 gelangt, in der der Umlaufbetrieb der Konstantpumpe aufgehoben ist und die Pumpe wieder über das Ausgangs-Rückschlagventil 108 ausschließlich in die P-Druckversorgungsleitung 191 fördert.

In der den Abwärtsbewegungen des Obermessers 17 zugeordneten Funktionsstellung II des Hauptsteuerventils 73 strömt das von der Konstantpumpe 63 geförderte Hydrauliköl vom P-Versorgungsanschluß 107 des Hauptsteuerventils 73 zu dessen A-Verbraucheranschluß 103 und von diesem in den oberen, bodenseitigen Antriebsdruckraum 49 des größeren Antriebszylinders 27. Aus dem stangenseitigen Antriebsdruckraum 53 des kleineren Antriebs-Hydrozylinders 28 verdrängtes Hydrauliköl strömt, solange sich das Flächen-Umschaltventil 209 in seiner Grundstellung 0 befindet, "zurück" zum P-Versorgungsanschluß 107 des Hauptsteuerventils 73 und addiert sich gleichsam zu dem von der Konstantpumpe 63 gelieferten Hydrauliköl-Strom, mit der Folge, daß die beiden Antriebs-Hydrozylinder 27 und 28 in einem "Eil"-Vorschubbetrieb arbeiten, der zu einer raschen Annäherung des Obermessers 17 an die Blechbahn 11 führt.

Sobald die Schneidkante 18 des Obermessers 17 auf die Blechbahn auftrifft, steigt der Druck in den Antriebsdruckräumen der Antriebs-Hydrozylinder 27 und 28 in dem Maße an, wie die zum Durchtrennen der Blechbahn 11 aufzubringende Schneidkraft ansteigt. Wird hierbei ein Druck von z.B. 220bar überschritten, so geht das druckgesteuerte Flächen-Umschaltventil 209 in seine Schaltstellung I über, in der der stangenseitige Antriebsdruckraum 53 des kleineren Antriebs-Hydrozylinders 28 über den nunmehr freigegebenen Durchflußpfad 217 des Flächen-Umschaltventils 209 mit dem drucklosen Vorratsbehälter 66 verbunden ist. Die beiden Antriebs-Hydrozylinder 27 und 28 arbeiten jetzt in einem "Last"-Vorschubbetrieb, in dem die Vorschubkraft erhöht ist, die Vorschubgeschwindigkeit jedoch erniedrigt, da nur noch die von der Konstantpumpe 63 geförderte Hydrauliköl-Menge über den A-Verbraucheranschluß 103 zum oberen Antriebsdruckraum 49 des größeren Antriebs-Hydrozylinders 27 gefördert wird.

Während der den abwärts gerichteten Bewegungen des Obermessers 17 zugeordneten Funktionszuständen der elektrohydraulischen Steuereinheit 72 ist der Ausgangsdruck der Konstantpumpe über die Drosselblende 189 und das dieser nachgeschaltete Eingangsrückschlagventil 188 zum einen "direkt" in die untere Steuerkammer 187 des Einlaßventils 167 und zum anderen über das Pilotventil 83 in die untere Steuerkammer 187' des Auslaßventils 164 eingekoppelt, mit der Folge, daß sowohl das Einlaßventil 167 als auch das Auslaßventil 164 ihre mit den oberen Endstellungen ihrer Kolben 171 beziehungsweise 171' verknüpften Sperrstellungen einnehmen.

Mit dem Erreichen einer unteren Endstellung des Obermessers 17, nachdem die Blechbahn 11 durchtrennt ist, wird das Pilotventil 83, z.B. gesteuert durch das Ausgangssignal eines auf diese untere Endstellung des Obermessers 17 ansprechenden UT-Schalters 225 wieder in seine Grundstellung 0 zurückgeschaltet. Als Folge hiervon tritt zum einen über das in seiner Schaltstellung I verbleibende Umschaltventil 84 eine Druckentlastung der unteren Steuerkammer 82 des Hauptsteuerventils 73 ein, dessen Ventilkolben 76 dadurch in seine untere Endstellung geschoben wird, und zum anderen auch eine Druckentlastung der unteren Steuerkammer 187' des Auslaßventils 164, dessen Kolben 171', bedingt durch den Druckabfall über seiner Drosselblende 198, nach unten verschoben wird, mit der Folge, daß der die Druckentlastung der Niederhalter vermittelnde, der Offen-Stellung des Auslaßventils 164 entsprechende Strömungspfad, der direkt zum drucklosen Vorratsbehälter 66 führt, freigegeben wird und die Niederhalter 29 rasch von der Blechbahn 11 abheben. Während der Hauptsteuerventilkolben 76 aus seiner oberen Endstellung, aus der heraus sich das Obermesser 17 abwärts bewegt hatte, in seine untere Endstellung geschoben wird, die der Aufwärts-Bewegung des Obermessers 17 zugeordnet ist, ist die Mittelstellung 0 des Hauptsteuerventils durchlaufen worden, in der Hydrauliköl zum Druckspeicher 88 überströmen kann, so daß der Druckspeicher 88 während des Umschaltens von Abwärts- auf Aufwärts-Bewegung des Obermessers 17 Druckmedium aufnehmen und dadurch als Puffer wirken kann, der eine Druckschlag-Dämpfung und damit einen sanfteren Übergang vom abwärts in den aufwärts gerichteten Rückzugs-Bewegungsbetrieb bewirken kann. Dasselbe gilt sinngemäß für die Endphase der aufwärts gerichteten Rückzugsbewegung des Obermessers, in der der Kopieranschlag 128 den Hauptsteuerventilkolben 76 nach oben verschiebt, wobei das Hauptsteuerventil in seine Kopierstellung 0, die Speicher-Ladestellung gelangt, die auch mittels eines OT-Endschalters 224 elektrisch quittiert wird, durch dessen mit dem Erreichen der oberen Endstellung ausgelöstes Ausgangssignal ein Zurückschalten des Umschaltventils 84 in dessen Grundstellung gesteuert wird, so daß die elektrohydraulische Steuereinheit 72 nunmehr in den dem Speicher-Ladebetrieb zugeordneten Funktionszustand gesteuert ist, aus dem heraus, nachdem der Speicher 88 wieder aufgeladen ist, der nächste Schneidzyklus durch erneutes Umschalten des Pilotventils 83 in dessen Schaltstellung I eingeleitet werden kann.

Das Pilotventil 83 ist als 3-Stellungsventil ausgebildet, das durch alternative Erregung seiner Steuermagnete aus der federzentrierten Grundstellung 0 heraus gegen die Wirkung je einer der beiden Ventilfedern 218 und 219 in die Funktionsstellungen I und II schaltbar ist. In der - noch nicht erläuterten - Funktionsstellung II sind zwei Durchflußpfade 226 und 227 des Pilotventils 83 freigegeben, wobei der eine Durchflußpfad 227 den Druckversorgungsanschluß 127 des Pilotventils 83 mit dessen zweitem Steueranschluß 203 verbindet, und der andere Strömungspfad 226 den x-Steuerausgang 126 des Pilotventils 83 mit dessen T-Rücklaufanschluß 208 verbindet. Diese Funktionsstellung II des Pilotventils 83 ist einem "langsamen" Absenkungsbetrieb des Obermessers 17 zugeordnet, in dem die Konstantpumpe abgeschaltet ist und sich das Flächen-Umschaltventil 209 in seiner Grundstellung 0 befindet. In diesem Funktionszustand der elektrohydraulischen Steuereinheit 72 kann Hydrauliköl aus dem stangenseitigen Druckraum 53 des kleineren Hydrozylinders 28 über den offenen Durchflußpfad 211 des Flächen-Umschaltventils 209, die Drosselblende 189, das Eingangsrückschlagventil 188, das Druckventil 207, den in der Funktionsstellung II des Pilotventils 83 freigegebenen Durchflußpfad 227 und die Drosselblende 202, d.h. über einen insgesamt hohen Strömungswiderstand "gedrosselt" zum drucklosen Vorratsbehälter 66 abströmen, so daß sich das Obermesser 17 entsprechend langsam nach unten bewegt.

Diese Abwärtsbewegung setzt erst ein, nachdem der Druckspeicher 88, der als vorgespannter Blasenspeicher vorausgesetzt sei, entladen ist. Solange dies noch nicht der Fall ist, bleibt nach einem Abschalten der Konstantpumpe 63 in der OT-Stellung des Obermessers die hiermit verknüpfte Kopierstellung des Hauptsteuerventilkolbens 76 geregelt erhalten, wobei jedoch wegen der in dieser Stellung zwischen dem Speicher-Ringraum 111 und dem B-Verbraucheranschluß 113 bestehenden Verbindung über den gedrosselten Entlastungspfad Drucköl aus dem Speicher 88 abströmt und dieser entladen wird.

Die Einstellung der kleinen Schneidwinkel α, die die Schneidkante 18 des Obermessers 17 mit der Blechbahn-Ebene einschließt, erfolgt durch Ansteuerung des kleinen Antriebs-Hydrozylinders 28 im Sinne einer Anhebung oder Absenkung des mit der Kolbenstange 46 dieses Hydrozylinders bewegungsgekoppelten Endes des Obermessers, d.h. durch Schwenkung um diejenige Gelenkachse 58 um die der Obermesserträger 57 im Bereich des größeren Antriebs-Hydrozylinders 27 auf- und ab-schwenkbar ist, wobei die Winkeleinstellung in der OT-Lage des Obermessers 17 erfolgt, mit der die geregelte Kopierstellung des Hauptsteuerventils 73 verknüpft ist.

Zur Ansteuerung des kleineren Antriebszylinders 28 im Sinne der Schneidwinkel-Einstellung ist ein Winkel-Stellventil 228 der elektrohydraulischen Steuereinheit 72 vorgesehen, das als elektrisch ansteuerbares 4/3-Wege-Magnetventil ausgebildet ist, das eine durch Ventilfendern 229 und 231 zentrierte Grundstellung 0 und durch individuelle Erregung zweier Steuerwicklungen eines Steuer-Magnetsystems einstellbare, alternative Schaltstellungen I und II hat, die dem Absenkungsbeziehungsweise dem Rückzugs-Betrieb des Kolbens 43 des kleineren Hydrozylinders 28 zugeordnet sind.

Das Winkel-Stellventil 228 hat einen mit dem stangenseitigen Antriebsdruckraum 53 des kleineren Antriebs-Hydrozylinders und damit auch mit dem B-Verbraucheranschluß 113 des Hauptsteuerventils 73 verbundenen p-Versorgungsanschluß 232, einen mit dem drucklosen Vorratsbehälter 66 des Druckversorgungsaggregats 62 verbundenen T-Rücklaufanschluß 233, einen über ein druckgesteuert entsperrbares Rückschlagventil 234 und eine Drosselblende 236 mit dem bodenseitigen Antriebsdruckraum 51 des kleineren Antriebs-Hydrozylinders 28 verbundenen Verbraucheranschluß 237 und einen Steuerausgang 238, der mit einem Steuereingang 239 des entsperrbaren Rückschlagventils 234 verbunden ist.

In der Grundstellung 0 des Winkel-Stellventils 228 ist der P-Versorgungsanschluß 232 gegen den Verbraucheranschluß 237 abgesperrt, dieser jedoch mit dem T-Rücklaufanschluß 233 verbunden, mit dem in der Grundstellung des Winkel-Stellventils auch der Steuerausgang 238 des Winkel-Stellventils 228 kommunizierend verbunden ist. In der Grundstellung 0 des Winkel-Stellventils 228 ist das Rückschlagventil gesperrt. In der Funktionsstellung I ist der Steuerausgang 238 des Winkel-Stellventils 228 drukkentlastet, der Verbraucheranschluß 237 jedoch kommunizierend mit dem p-Versorgungsanschluß 232 verbunden, so daß das Rückschlagventil 234 durch den am p-Versorgungsanschluß 232 im Betrieb der Pumpe 63 sich aufbauenden Druck öffnet und Hydrauliköl in den bodenseitigen Antriebsdruckraum 51 des kleineren Hydrozylinders 28 einströmt, wodurch dessen Kolben 43 im Sinne einer Absenkung des mit diesem bewegungsgekoppelten Messer-Endes verschoben wird. In dieser Funktionsstellung I des Winkel-Stellventils 228 wird der Schneidwinkel α verkleinert. In der Schaltstellung II des Winkel-Stellventils ist der p-Versorgungsanschluß 232 mit dem Steuerausgang 238 des Winkel-Steuerventils 228 verbunden, mit der Folge, daß das Rückschlagventil 234 entsperrt wird. In dieser Funktionsstellung II ist der Verbraucheranschluß 237 kommunizierend mit dem T-Rücklaufanschluß 233 verbunden, so daß über das geöffnete Rückschlagventil Drucköl aus dem bodenseitigen Antriebsdruckraum 51 des kleineren Antriebs-Hydrozylinders 28 entweichen kann und demgemäß der Kolben 43 dieses Hydrozylinders 28 sich nach oben bewegt, was einer Vergrößerung des Schneidwinkels α entspricht. Die Position des Kolbens 42 des größeren Antriebs-Hydrozylinders 27 wird gehalten, da über diesen die OT-Stellung des Obermessers 17 in demjenigen Bereich geregelt wird, in dem der Messerträger 57 gelenkig mit der Kolbenstange 44 des Kolbens 42 des größeren Antriebs-Hydrozylinders verbunden ist.

## Patentansprüche

1. Blechschere (10) für große Schnittlängen mit einem gegenüber einem an einem Scherenbett (13) feststehend angeordneten Untermesser (14) geführt auf- und abbewegbaren Obermesser (17), zu dessen Schneid-und Rückzugsantrieb zwei als Differentialzylinder ausgebildete, doppelt wirkende, hydraulisch in Reihe geschaltete, lineare Hydrozylinder (27, 28) vorgesehen sind, deren Kolben (42, 43) einseitig nach unten aus den Zylindern austretende Kolbenstangen (44, 46) haben, an denen das Obermesser zur Einstellung eines kleinen Schneidwinkels von maximal 3° um rechtwinklig zu den Schneidkanten der Messer verlaufende Achsen (58, 59) schwenkbar gelagert ist, wobei die Kolben und die Kolbenstangen der beiden Antriebshydrozylinder unterschiedliche Durchmesser haben, die dahingehend aufeinander abgestimmt sind, daß die bodenseitige Kolbenfläche (68) des kleineren Hydrozylinders (28) der kreisringförmigen, stangenseitigen Kolbenfläche (67) des dem Durchmesser nach größeren Differentialzylinders (27) entspricht und die an den beiden Differentialzylindern entfalteten Vorschubkräfte jeweils dieselben Beträge haben, sowie die Gewichtslast-Anteile auf die beiden Hydrozylinder gleichmäßig verteilt sind, zu deren Antriebssteuerung in ihre alternativen Vorschub- und Rückzugsbewegungs-Richtungen ein mittels eines elektrisch ansteuerbaren Pilotventils (83) druckgesteuertes Hauptsteuerventil (73) vorgesehen ist, das in alternativen Funktionsstellungen die für die jeweils angesteuerte Bewegungsrichtung erforderliche Strömungspfad-Kombination freigibt, über die der Zufluß von Druckmedium aus einem als Druckquelle eine Konstantpumpe (63) umfassenden Druckversorgungsaggregat (62) zu einem der Hydrozylinder und der Abfluß von Druckmedium aus dem anderen Zylinder erfolgt, sowie mit einer hydraulischen Niederhalter-Anordnung (29), mittels derer das Blechwerkstück (11) während des Schneidvorganges am Bett der Schere festklemmbar ist, **gekennzeichnet durch** die folgenden Merkmale:

a) Als Druckquelle für das Anlegen der Niederhalter (29) an die Blechbahn (11) ist ein Druckspeicher (88) vorgesehen, der mindestens in einer Stillstandsphase des Obermessers (17) aufladbar ist;

b) das Hauptsteuerventil (73) ist als Schieberventil ausgebildet, dessen Kolben (76) zwei über eine Zwischenstellung (0) unmittelbar aneinander anschließende Hubbereiche $\Delta h_1$ und $\Delta h_2$ hat, die alternativen Funktionsstellungen (II und I) des Hauptsteuerventils (73) zugeordnet sind, wobei in der einen die Wege-Konfiguration für den Vorschub- und Schneidbetrieb des Obermessers (17) und in der anderen die Wege-Konfiguration für den Rückzugsbetrieb des Obermessers gegeben ist;

c) Es ist ein die Vorschub- und Rückzugsbewegungen des Obermessers (17) mit ausführender Kopieranschlag (128) vorgesehen, der **durch** seine Anlage an einem Kolbenfortsatz (94) und die **dadurch** bedingte, mechanische Mitnahme des Kolbens (76) die vom Blechwerkstück (11) entfernte (OT-)Umkehr-Position des Obermessers (17) auf die zentrale Mittelstellung des Hauptsteuerventils (73) kopiert;

d) in der Kopierstellung des Kolbens (76) sowie innerhalb eines sich beidseits der Mittelstellung (0) erstreckenden Hubbereiches, der kleiner ist als der Gesamthub $(\Delta h_1 + \Delta h_2)$ des Kolbens (76), besteht zwischen einem Ventilraum (106), in den der Ausgangsdruck der Konstantpumpe (63) eingekoppelt ist, und dem Druckspeicher (88) kommunizierende Verbindung;

e) es ist eine druckgesteuerte Speicher-Lade-Ventilanordnung (131) vorgesehen, die nach einem Ladezyklus des Druckspeichers (88) die Konstantpumpe (63) des Druckversorgungsaggregats (62) auf Umlaufbetrieb umschaltet;

f) es ist eine elektrohydraulische Steuereinheit (72) vorgesehen, die die Funktion vermittelt, daß im Verlauf eines Schneidzyklus zuerst die Niederhalter (29) angelegt werden, bevor das Hauptsteuerventil (73) in seine dem Vorschub- und Schneidbetrieb zugeordnete Funktionsstellung (II) gelangt.

2. Blechschere nach Anspruch 1, **dadurch gekennzeichnet, daß** das Hauptsteuerventil (73) durch Druckbeaufschlagung einer Steuerfläche (92) des Betrages $F_S$ seines Kolbens (76) gegen eine aus einer Druckbeaufschlagung einer dem Betrage nach kleineren Steuerfläche (97) des Betrages $F_G$ des Kolbens (76) mit dem Ausgangsdruck des Druckspeichers (88) resultierende Kraft in die dem Schneid-Vorschubbetrieb zugeordnete Funktionsstellung (II) und durch Druckentlastung der größeren Steuerfläche (92) in die dem Rückzugsbetrieb des Obermessers (17) zugeordnete Funktionsstellung (I) steuerbar ist.

3. Blechschere nach Anspruch 2, **dadurch gekennzeichnet, daß** das Flächenverhältnis $F_S/F_G$ der größeren Steuerfläche (92) zur kleineren Steuerfläche (97) einen Wert zwischen 1,8 und 2,5, vorzugsweise einen Wert um 2 hat.

4. Blechschere nach Anspruch 2 oder Anspruch 3, **dadurch gekennzeichnet, daß** die größere Steuerfläche (92) des Betrages $F_S$ als Ringfläche ausgebildet ist, durch die ein in einem Endabschnitt ($116_5$) einer axial durchgehenden Ventilbohrung (116) eines mittleren Gehäuseblocks (81) des Ventilgehäuses (77) druckdicht verschiebbarer Kolben-Endabschnitt (93) gegen einen dem Durchmesser nach kleineren, stöβelförmigen Kolbenfortsatz (94) abgesetzt ist, der seinerseits in einer mit der Ventilbohrung (116) koaxialen Durchgangsbohrung (96) eines druckdicht an dem mittleren Gehäuseblock (81) angesetzten Gehäuseabschlußteils (78), aus dieser mit einem freien Endabschnitt, dessen Endstirnfläche (129) die Anlagefläche für den Kopieranschlag (128) bildet, herausragend, druckdicht verschiebbar geführt ist, wobei die von dem stößelförmigen Kolbenfortsatz (94) axial durchsetzte, durch das Gehäuseabschlußteil (78) und den mittleren Gehäuseblock (81) gehäusefest begrenzte Steuerkammer (82) mit einem x-Steueranschluß (86) des Hauptsteuerventils (73) in kommunizierender Verbindung steht.

5. Blechschere nach Anspruch 4, **dadurch gekennzeichnet, daß** die kleinere Steuerfläche (97) des Betrages $F_G$ der Querschnittsfläche eines am Kolben (76) des Hauptsteuerventils (73) axial abgestützten oder mit diesem fest verbundenen Betätigungsstößels (89) entspricht, der an dem dem frei endenden Kolbenfortsatz (94) abgewandten Ende des Kolbens (76) angeordnet ist und in einer mit der durchgehenden Ventilbohrung (116) des mittleren Gehäuseblocks (81) koaxialen Bohrung eines an dieses druckdicht angesetzten weiteren, "oberen" Gehäuseabschlußteils (79) druckdicht verschiebbar ist, die in eine durch dieses Gehäuseabschlußteil (79) gehäusefest begrenzte, "obere" Steuerkammer (87) mündet, in die im Betrieb der Blechschere (10) der jeweils im Druckspeicher (88) herrschende Druck $p_S$ eingekoppelt ist.

6. Blechschere nach einem der Ansprüche 1 bis 5, **dadurch gekennzeichnet, daß** das Hauptsteuerventil (73) mit parallelem Verlauf seiner zentralen Längsachse (74) zu den zentralen Längsachsen (39, 41) der Antriebshydrozylinder (28, 29) am Scherengestell (13) montiert ist, und daß der Kopieranschlag (128) fest mit dem Kolben (42) des größeren Antriebshydrozylinders (27) verbunden ist.

7. Blechschere nach einem der Ansprüche 2 bis 6, **gekennzeichnet durch** die folgenden Merkmale:

    a) In einer einem Rückzugsbetrieb des Obermessers (17) sowie einem Speicher-Ladebetrieb zugeordneten Grundstellung (0) des Pilotventils (83) ist ein Druckversorgungsanschluß (127) gegen einen x-Steuerausgang (126) des Pilotventils (83), über den die Druckbeaufschlagung der größeren Steuerfläche (92) des Hauptsteuerventilkolbens (76) sowie deren Druckentlastung erfolgt, abgesperrt, diese jedoch kommunizierend mit dem drucklosen Vorratsbehälter (66) des Druckversorgungsaggregats verbunden;

    b) In einer dem Vorschub- und Schneidbetrieb des Obermessers (17) zugeordneten Schaltstellung (I) des Pilotventils (83) ist der Druckversorgungsanschluß (127) mit dem x-Steuerausgang (126) des Pilotventils (83) verbunden, dieser jedoch gegen den Vorratsbehälter (66) abgesperrt;

    c) Je nachdem, welcher Druck der höhere ist, wird entweder der momentan im Druckspeicher (88) herrschende Druck oder der über ein Ausgangsrückschlagventil (108) und eine Drosselblende (189) vom Pumpenausgang (109) zum p-Versorgungsanschluß (127) des Pilotventils (83) weitergeleitete Druck in die Niederhalter (29) eingekoppelt.

8. Blechschere nach Anspruch 7, **dadurch gekennzeichnet, daß** ein Drosselelement (168) und/oder ein steuerbares Schaltelement (84) vorgesehen ist, mittels dessen der Anstieg des Druckes $p_S$, mit dem die größere Steuerfläche (92) des Hauptsteuerventilkolbens (76) beaufschlagt ist, gegenüber einem Anstieg des am x-Steuerausgang (126) herrschenden, in die Niederhalter (29) eingekoppelten Druckkes verzögerbar ist.

9. Blechschere nach Anspruch 8, **dadurch gekennzeichnet, daß** das Schaltelement (84) als elektrisch ansteuerbares Magnetventil ausgebildet ist, das in seiner Grundstellung (0) den x-Anschluß (86) des Hauptsteuerventils (73), über den die Steuerfläche (92) mit Steuerdruck $p_S$ beaufschlagbar ist, mit dem drucklosen Vorratsbehälter (66) verbindet und in seiner bei elektrischer Ansteuerung eingenommenen Schaltstellung (I) den x-Steuerausgang (126) des Pilotventils (83) mit dem x-Steueranschluß (86) des Hauptsteuerventils (73) verbindet.

10. Blechschere nach einem der Ansprüche 7 bis 9, **dadurch gekennzeichnet, daß** zwischen den Druckspeicher (88) und die Antriebsdruckräume (34) der Niederhalter (29) ein Einlaßventil (167) geschaltet ist, das eine sperrende Grundstellung hat und gleichzeitig mit oder unmittelbar nach dem Übergang des Pilotventils in dessen Schaltstellung (I) in eine Schaltstellung gelangt, in der ein den Speicher (88) mit großem Überströmquerschnitt mit den Niederhaltern (29) verbindender Strömungspfad freigegeben ist, und, sobald in den Niederkaltern (29) der für die eine Mindest-Haltekraft erforderliche Druck erreicht ist, wieder in seine sperrende Grundstellung gelangt.

11. Blechschere nach Anspruch 10, **gekennzeichnet durch** die folgenden Merkmale:

    a) Das Einlaßventil (167) ist als druckgesteuertes 2/2-Wegeventil mit federzentrierter, sperrender Grundstellung, in der der Druckspeicher (88) gegen die Niederhalter (29) abgesperrt ist, und offener Schaltstellung ausgebildet, in der der Druckspeicher (88) mit den Antriebsdruckräumen (34) der Niederhalter (29) verbunden ist;

    b) **Durch** den Kolben (171) des Einlaßventils (167) ist eine erste Steuerkammer (186), die mit dem Druckspeicher (88) in kommunizierender Verbindung gehalten ist, gegen eine zweite Steuerkammer (187) axial beweglich abgegrenzt, die dem am p-Versorgungsanschluß (127) des Pilotventils (83) herrschenden Druck ausgesetzt ist;

    c) Der Kolben (171) des Einlaßventils (167) ist als Stufenkolben ausgebildet, dessen dem Durchmesser nach kleinere Kolbenstufe (182) die axial bewegliche Begrenzung der speicherseitigen Steuerkammer (186) bildet;

d) Der p-Druckversorgungsanschluß (127) des Pilotventils (83) ist über ein Eingangsrückschlagventil (188) und eine Drosselblende (189) mit dem vom Druckversorgungsaggregat (62) zum p-Versorgungsanschluß (107) des Hauptsteuerventils (73) führenden Druckölpfades (191) verbunden.

12. Blechschere nach einem der Ansprüche 7 bis 11, **dadurch gekennzeichnet, daß** zwischen die Niederhalter (29) und den drucklosen Vorratsbehälter (66) des Druckversorgungsaggregats (62) ein Auslaßventil (164) geschaltet ist, das eine sperrende Grundstellung hat und mit oder unmittelbar nach dem Umschalten des Pilotventils (83) in dessen dem Rückzugsbetrieb des Obermessers (17) zugeordnete Grundstellung (0) in eine Schaltstellung gelangt, in der die Antriebsdruckräume (34) der Niederhalter (29) über einen Strömungspfad mit großem Überströmquerschnitt mit dem Vorratsbehälter (66) des Druckversorgungsaggregats (62) verbunden sind.

13. Blechschere nach Anspruch 12, **dadurch gekennzeichnet, daß** das Auslaßventil (164) als druckgesteuertes Ventil ausgebildet ist, durch dessen Kolben (171') eine erste Steuerkammer (186'), die mit den Antriebsdruckräumen (34) der Niederhalter (29) in kommunizierender Verbindung gehalten ist, gegen eine zweite Steuerkammer (187') abgegrenzt ist, die mit dem x-Steuerausgang (126) des Pilotventils (13) verbunden ist, wobei die aus dem Druck, der in die zweite Steuerkammer (187') eingekoppelt ist, resultierende Kraft den Kolben (171') in dessen Grundstellung drängt, und daß der Kolben (171') als Stufenkolben ausgebildet ist, dessen dem Durchmesser nach kleinere Kolbenstufe die axial bewegliche Begrenzung der mit den Niederhaltern (29) verbundenen Steuerkammer (186') bildet.

14. Blechschere nach Anspruch 13, **dadurch gekennzeichnet, daß** der Kolben (171') des Auslaßventils (164) mit einer Drosselblende (198) versehen ist, über die die beiden Steuerkammem (186' und 187') des Auslaßventils (164) in kommunizierender Verbindung gehalten sind.

15. Blechschere nach einem der Ansprüche 7 bis 14, **dadurch gekennzeichnet, daß** ein Druckminderventil (207) vorgesehen ist, mittels dessen der Höchstbetrag des in die Niederhalter (29) einkoppelbaren Drukkes auf einen Wert begrenzt ist, der signifikant niedriger ist als der höchste Betriebsdruck, mit dem die Konstantpumpe (63) arbeitet, jedoch signifikant höher als der maximale Druck, auf den der Druckspeicher (88) aufladbar ist.

16. Blechschere nach einem der Ansprüche 1 bis 15, **gekennzeichnet durch** die folgenden Merkmale:

a) Die Speicher-Ladeventilanordnung (131) umfaßt ein druckgesteuertes als 2/2-Wegeventil ausgebildetes Umschaltventil (132) das als Ladestellung eine sperrende Grundstellung (0) hat, in der der Druckausgang der Konstantpumpe (63) gegen den drucklosen Vorratsbehälter abgesperrt und der Speicher (88) über das Ausgangsrückschlagventil (108) des Druckversorgungsaggregats (62) und den im Mittelstellungsbereich des Hauptsteuerventilkolbens (76) freigegebenen Ladestrompfad aufladbar ist, und als Schaltstellung (I) eine Durchflußstellung, in der der Druckausgang (109) der Konstantpumpe (63) mit dem drucklosen Vorratsbehälter (66) verbunden ist;

b) Der Druckausgang (109) der Konstantpumpe (63) ist zum einen über eine Drossel (137) mit einer ersten Steuerkammer (134) des Umschaltventils (132) verbunden, aus deren Druckbeaufschlagung eine mit der Vorspannung der Ventilfeder (133) des Umschaltventils (132) gleichsinnig wirkende, das Umschaltventil (132) in seine Grundstellung drängende Kraft resultiert, und zum anderen mit einer zweiten Steuerkammer (138) des Umschaltventils (132) verbunden, aus deren Druckbeaufschlagung eine den Kolben des Umschaltventils (132) in die Durchflußstellung (I) drängende Kraft resultiert;

c) Der Betrag $f_1$ einer die axial bewegliche Begrenzung der ersten Steuerkammer (134) bildenden Stirnfläche des Ventilkolbens ist signifikant größer als der Betrag $f_2$ einer die axial bewegliche Begrenzung der zweiten Steuerkammer (138) bildenden Endstirnfäche des Ventilkolbens, wobei das Verhältnis $f_1/f_2$ einen typischen Wert um 1,4 hat;

d) Als Vorsteuerventil für das Umschaltventil (132) ist ein Druckventil (141) vorgesehen, das in eine die erste Steuerkammer (134) des Umschaltventils mit einem Entlastungssteuerpfad (142) verbindende Durchflußstellung gelangt, wenn der Speicherdruck seinen oberen Grenzwert überschreitet und erst dann wieder in seine sperrende Grundstellung zurückfällt, wenn der Speicherdruck einen vom oberen Grenzwert verschiedenen, niedrigeren unteren Grenzwert unterschreitet;

e) Der Entlastungssteuerpfad ist mittels eines Hilfsventils (143) freigebbar und absperrbar, dessen Kolben beidseits eines Mittelstellungsbereiches, innerhalb dessen der Entlastungsströmungspfad (142) mit dem drucklosen Vorratsbehälter (66) verbunden ist, Sperrstellungsbereiche (I) beziehungsweise (II) hat;

f) Die Hubbewegungen der Kolben (76 beziehungsweise 143') des Hauptsteuerventils (73) und des Hilfsventils (143) sind formschlüssig gekoppelt, derart, daß das Hilfventil (143) nur dann kommunizierende Verbindung des Entlastungssteuerpfades (142) mit dem Vorratsbehälter (66) vermittelt, wenn auch der Kolben (76) des Hauptsteuerventils (73) eine Position innerhalb seines für eine Speicherladung geeigneten mittleren Hubbereiches einnimmt.

17. Blechschere nach Anspruch 16, **dadurch gekennzeichnet, daß** das Hilfsventil (143) in das Hauptsteuerventil integriert ist.

18. Blechschere nach Anspruch 17, **gekennzeichnet durch** die folgenden Merkmale:

a) Innerhalb desjenigen Endabschnittes ($116_5$) der axial durchgehenden Ventil-Bohrung (116), der sich zwischen einem mit dem Druckspeicher (88) in ständig-kommunizierender Verbindung stehenden Speicher-Ringraum (111) des mittleren Gehäuseblocks (81) und der von dem stößelförmigen Kolbenfortsatz (94) durchsetzten x-Steuerkammer (82) erstreckt, ist eine einen Abschnitt des Entlastungs-Steuerpfades (142) bildende, einen mittleren Bereich des Bohrungsabschnitts ($116_5$) radial erweiternde $x_1$-Ringnut (144) vorgesehen, die mit einem $x_1$-Steueranschluß des Hauptsteuerventils (73) in kommunizierender Verbindung steht;

b) Der beidseits der $x_1$-Ringnut (144) in dem Bohrungs-Endabschnitt ($116_5$) druckdicht verschiebbare Kolbenabschnitt (93) ist mit einer radialen Fensteröffnung (147) versehen, die mit einer innerhalb des Kolbenabschnitts (93) endenden, den Kolben (76) im übrigen durchsetzenden, zentralen axialen Bohrung (148) in kommunizierender Verbindung steht, die ihrerseits in jeder möglichen Position des Hauptsteuerkolbens (76) mit einem Anschlußraum (99) des Hauptsteuerventils (73) in kommunizierender Verbindung steht, der permanent mit dem drucklosen Vorratsbehälter (66) verbunden ist;

c) Die Anordnung der $x_1$-Ringnut (144) im Bohrungsendabschnitt ($116_5$) des Ventilgehäuses (77), die Anordnung der Fensteröffnung (147) am Hauptsteuerventilkolben (76) sowie die in axialer Richtung gemessenen lichten Weiten

der $x_1$-Ringnut (144) und der Fensteröffnung (147) sind dahingehend aufeinander abgestimmt, daß, von jeder der beiden Endstellungen I und II des Kolbens (76) aus gesehen, ein Mindesthub des Kolbens (76) erforderlich ist, um die Fensteröffnung (147) in kommunizierende Überlappung mit der $x_1$-Ringnut (144) zu bringen.

19. Blechschere nach einem der Ansprüche 1 bis 18, **dadurch gekennzeichnet, daß** ein Flächen-Umschaltventil (209) vorgesehen ist, das als druckgesteuertes oder als in Abhängigkeit von sensierten Werten des Druckes elektrisch ansteuerbares Ventil ausgebildet ist, das bei Überschreiten eines Schwellenwertes $p_{US}$ des in den bodenseitigen Antriebsdruckraum (49) des größeren Antriebshydrozylinders (27) eingekoppelten Betriebsdsruckes aus einer Grundstellung (0) in der der stangenseitige Antriebsdruckraum (53) des kleineren Antriebshydrozylinders (28) mit dem p-Versorgungsanschluß (107) des Hauptsteuerventils (73) verbunden ist, in seine Schaltstellung (I) gelangt, in der der stangenseitige Antriebsdruckraum (53) des kleineren Antriebshydrozylinders (28) mit dem drucklosen Vorratsbehälter (66) verbunden ist, und in seine Grundstellung (0) zurückgeschaltet wird, wenn der im bodenseitigen Antriebssdruckraum (49) des größeren Antriebszylinders (27) herrschende Druck einen Schwellenwert $p_R$ unterschreitet, der durch die Beziehung

$$P_R \;=\; P_{US} \cdot \left( \frac{F_1 \;-\; F_3}{F_1} \;-\; a \right)$$

gegeben ist, in der mit $F_3$ die dem Druck im stangenseitigen Antriebsdruckraum (53) des kleineren Antriebshydrozylinders (28) ausgesetzte Ringfläche seines Kolbens (43), mit $F_1$ die dem Druck im bodenseitigen Antriebsdruckraum (49) des größeren Antriebshydrozylinders (27) ausgesetzte Kreisfläche seines Kolbens (42) und mit a eine Konstante bezeichnet ist, die vorzugsweise einen Wert um 0,1 hat.

20. Blechschere nach einem der Ansprüche 1 bis 19, **dadurch gekennzeichnet, daß** das Pilotventil (83) als 3-Stellungs-Ventil ausgebildet ist, das zusätzlich zu der dem Rückzugsbetrieb des Obermessers (17) zugeordneten Grundstellung (0) und der dem Vorschub- und Schneidbetrieb zugeordneten Schaltstellung (I) eine zweite durch Erregung eines Steuermagneten des Pilotventils (83) einstellbare Schaltstellung (II) hat, in der der Druckversorgungsanschluß (127) des Pilotventils (83) über einen Strömungspfad (227) mit dem zweiten Steueranschluß (203) des Pilotventils (83) verbunden ist, der über eine Drosselblende (202) mit dem drucklosen Vorratsbehälter (66) verbunden ist, und in der der x-Steuerausgang (126) des Pilotventils (83) über einen Strömungspfad (226) des Pilotventils (83) mit dessen T-Rücklaufanschluß (208) verbunden ist.

21. Blechschere nach einem der Ansprüche 1 bis 20, **dadurch gekennzeichnet, daß** die elektrohydraulische Steuereinheit (72) eine Stellventil-Anordnung (228, 234) umfaßt, mittels derer , während das Hauptsteuerventil (73) seine Kopierstellung einnimmt, der kleinere Antriebshydrozylinder (28) zu Stellbewegungen für die Einstellung des Schneidwinkels $\alpha$ des Obermessers (17) ansteuerbar ist.

## Claims

1. Sheet-metal shearing machine (10) for long lengths of cut with, aligned opposite a lower blade (14) disposed fixedly on a shear bed (13), an upwardly and downwardly movable upper blade (17) for whose cutting drive and return drive there are provided two double-action linear hydraulic cylinders (27, 28) which are designed as differential cylinders and are connected in hydraulic series, whose pistons (42, 43) have piston rods (44, 46), emerging downwards from one side of the cylinders, on which the upper blade is mounted so as to be pivotable about axles (58, 59) running perpendicularly to the cutting edges of the blades for the purpose of setting a small cutting angle of a maximum of 3°, the pistons and the piston rods of the two hydraulic drive cylinders having different diameters which are coordinated with one another such that the head-side piston surface (68) of the smaller hydraulic cylinder (28) corresponds to the annular, rod-side piston surface (67) of the larger-diameter differential cylinder (27) and the advance forces deployed at the two differential cylinders have the same magnitudes in each case, and the weight load components being distributed to the two hydraulic cylinders, for whose drive control into their alternative advance and return movement directions there is provided a main control valve (73), pressure-controlled by means of an electrically driveable pilot valve (83), which, in alternative functional positions, releases the flow path combination, required for the respectively driven movement direction, via which pressure medium is supplied out of a pressure supply unit (62) comprising, as a pressure source, a fixed-displacement pump (63), to one of the hydraulic cylinders, and pressure medium is discharged out of the other cylinder, and with a hydraulic hold-down arrangement (29) by means of which the sheet-metal workpiece (11) can be clamped in place on the bed of the shearing machine during the cutting operation, **characterized by** the following features:

a) as a pressure source for the application of the hold-down devices (29) on to the continuous length of sheet metal (11), a pressure accumulator (88) is provided which is chargeable in at least one stoppage phase of the upper blade (17);

b) the main control valve (73) is designed as a sliding valve whose piston (76) has two stroke ranges $\Delta h_1$ and $\Delta h_2$, directly adjoining one another via an intermediate position (0), which are assigned to alternative functional positions (II and I) of the main control valve (73), the path configuration for the advance and cutting operation of the upper blade (17) being given in the one and the path configuration for the return operation of the upper blade being given in the other;

c) a copying stop (128) is provided which executes the advance and return movements of the upper blade (17) jointly with it and which, through its contact on a piston extension (94) and the resultant mechanical entrainment of the piston (76), copies the (top dead centre) reversal position, remote from the sheet metal workpiece (11), of the upper blade (17) to the central middle position of the main control valve (73) ;

d) in the copy position of the piston (76), and within a stroke range which extends on both sides of the middle position (0) and is smaller than the total stroke ($\Delta h_1 + \Delta h_2$) of the piston (76), communication exists between a valve space (106), into which the output pressure of the fixed-displacement pump (63) is injected, and the pressure accumulator (88);

e) a pressure-controlled accumulator charging valve arrangement (131) is provided which, following a charging cycle of the pressure accumulator (88), switches the fixed-displacement pump (63) of the pressure supply unit (62) over to circulation operation;

f) an electro-hydraulic control unit (72) is provided through which is effected the function that, in the course of a cutting cycle, the hold-down devices (29) are applied first, before the main control valve (73) comes into its functional position (II) assigned to the advance and cutting operation.

2. Sheet-metal shearing machine according to Claim 1, **characterized in that** the main control valve (73), as a result of a pressurization of a control surface (92), of the magnitude $F_S$, of its piston (76) against a force resulting from a pressurization of a smaller-magnitude control surface (97), of the magnitude $F_G$, of the piston (76) with the output pressure of the pressure accumulator (88), can be controlled into the functional position (II) assigned to the cutting advance operation and, as a result of pressure relief of the larger control surface (92), can be controlled into the functional position (I) assigned to the return operation of the upper blade (17).

3. Sheet-metal shearing machine according to Claim 2, **characterized in that** the area ratio $F_S/F_G$ of the larger control surface (92) to the smaller control surface (97) has a value between 1.8 and 2.5, preferably a value of about 2.

4. Sheet-metal shearing machine according to either of Claims 2 or 3, **characterized in that** the larger control surface (92) of the magnitude $F_S$ is designed as an annular surface by which a piston end portion (93), which is displaceable, in a pressure-tight manner, in an end portion ($116_5$) of an axially continuous valve bore (116) of a middle housing block (81) of the valve housing (77) is stepped towards a smaller-diameter, plunger-type piston extension (94) which, in turn, is displaceably guided, in a pressure-tight manner, in a through-bore (96), coaxial with the valve bore (116), of a housing closing part (78), attached in a pressure-tight manner to the middle housing block (81), projecting from this said through-bore with a free end portion whose end surface (129) forms the contact surface for the copying stop (128), the control chamber (82), through which the plunger-type piston extension (94) passes in the axial direction and which is delimited, rigidly in respect of the housing, by the housing closing part (78) and the middle housing block (81), communicating with an x control connection (86) of the main control valve (73).

5. Sheet-metal shearing machine according to Claim 4, **characterized in that** the smaller control surface (97) of the magnitude $F_G$ corresponds to the cross-sectional area of an actuating plunger (89), axially supported on the piston (76) of the main control valve (73) or fixedly joined to it, which is disposed at the end of the piston (76) which faces away from the freely ending piston extension (94) and is displaceable, in a pressure-tight manner, in a bore, coaxial with the continuous valve bore (116) of the middle housing block (81), of a further "upper" housing closing part (79) attached to the latter in a pressure-tight manner, which opens into an "upper" control chamber (87) delimited, rigidly in respect of the housing, by this housing closing part (79), into which the pressure $p_s$ respectively prevailing in the pressure accumulator (88) is injected when the sheet-metal shearing machine (10) is in operation.

6. Sheet-metal shearing machine according to any one of Claims 1 to 5, **characterized in that** the main control valve (73) is mounted on the shear stand (13) with its central longitudinal axis (74) running parallel to the central longitudinal axes (39, 41) of the hydraulic drive cylinders (27, 28), and the copying stop (128) is fixedly joined to the piston (42) of the larger hydraulic drive cylinder (27).

7. Sheet-metal shearing machine according to any one of Claims 2 to 6, **characterized by** the following features:

   a) in a return operation of the upper blade (17), and when the pilot valve (83) is in an initial position (0) assigned to an accumulator charging operation, a pressure supply connection (127) is closed against an x control output (126) of the pilot valve (83) via which the larger control surface (92) of the main control valve piston (76) is pressurized and relieved of pressure, but the said control surface communicates with the unpressurized reservoir (66) of the pressure supply unit;

   b) when the pilot valve (83) is in a switching position (I) assigned to the advance and cutting operation of the upper blade (17), the pressure supply connection (127) is connected to the x control output (126) of the pilot valve (83) but the latter is closed against the reservoir (66);

   c) depending on which pressure is the greater, either the instantaneously prevailing pressure in the pressure accumulator (88) or the pressure transmitted, via an output check valve (108) and a choke restrictor (189) from the pump output (109) to the p supply connection (127) of the pilot valve (83) is injected into the hold-down devices (29).

8. Sheet-metal shearing machine according to Claim 7, **characterized in that** a choke element (168) and/or a controllable switching element (84) is provided, by means of which the rise in the pressure $p_s$ with which the larger control surface (92) of the main control valve piston (76) is pressurized is delayed relative to a rise in the pressure, prevailing at the x control output (126), which is injected into the hold-down devices (29).

9. Sheet-metal shearing machine according to Claim 8, **characterized in that** the switching element (84) is designed as an electrically driveable solenoid valve which, in its initial position (0), connects the x connection (86) of the main control valve (73), via which the control surface (92) is pressurized with control pressure $p_s$, to the unpressurized reservoir (66) and, in its switching position (I) assumed when electrically driven, connects the x control output (126) of the pilot valve (83) to the x control output (86) of the main control valve (73).

10. Sheet-metal shearing machine according to any one of Claims 7 to 9, **characterized in that** there is connected between the pressure accumulator (88) and the drive pressure spaces (34) of the hold-down devices (29) an inlet valve (167) which has a blocking initial position and, simultaneously with or immediately following the transition of the pilot valve into its switching position (I), comes into a switching position in which a flow path is released which connects the accumulator (88), with a large overflow cross-section, to the hold-down devices (29) and, as soon as the pressure required for a minimum holding force is attained in the hold-down devices (29), again comes into its blocking initial position.

11. Sheet-metal shearing machine according to Claim 10, **characterized by** the following features:

a) the inlet valve (167) is designed as a pressure-controlled 2/2-way valve with a spring-centred, blocking initial position in which the pressure accumulator (88) is closed against the hold-down devices (29), and with an open switching position in which the pressure accumulator (88) is connected to the drive pressure spaces (34) of the hold-down devices (29);

b) the piston (171) of the inlet valve (167) movably delimits in the axial direction a first control chamber (186), which is held in communication with the pressure accumulator (88), against a second control chamber (187) which is subject to the pressure prevailing at the p supply connection (127) of the pilot valve (83);

c) the piston (171) of the inlet valve (167) is designed as a step piston whose smaller-diameter piston stage (182) forms the axially movable delimitation of the accumulator-side control chamber (186) ;

d) the p pressure supply connection (127) of the pilot valve (83) is connected, via an input check valve (188) and a choke restrictor (189), to the pressure oil path (191) leading from the pressure supply unit (62) to the p supply connection (107) of the main control valve (73).

12. Sheet-metal shearing machine according to any one of Claims 7 to 11, **characterized in that** there is connected between the hold-down devices (29) and the unpressurized reservoir (66) of the pressure supply unit (62) a discharge valve (164) which has a blocking initial position and, with or immediately following the changeover of the pilot valve (83) into its initial position (0) assigned to the return operation of the upper blade (17), comes into a switching position in which the drive pressure spaces (34) of the hold-down devices (29) are connected, via a flow path with a large overflow cross-section, to the reservoir (66) of the pressure supply unit (62).

13. Sheet-metal shearing machine according to Claim 12, **characterized in that** the discharge valve (164) is designed as a pressure-controlled valve whose piston (171') delimits a first control chamber (186'), which is held in communication with the drive pressure spaces (34) of the hold-down devices (29), against a second control chamber (187') which is connected to the x control output (126) of the pilot valve (13), the force resulting from the pressure that is injected into the second control chamber (187') forcing the piston (171') into its initial position, and the piston (171') is designed as a step piston whose smaller-diameter piston stage forms the axially movable delimitation of the control chamber (186') connected to the hold-down devices (29).

14. Sheet-metal shearing machine according to Claim 13, **characterized in that** the piston (171') of the discharge valve (164) is provided with a choke restrictor (198) via which the two control chambers (186' and 187') of the discharge valve (164) are held in communication.

15. Sheet-metal shearing machine according to any one of Claims 7 to 14, **characterized in that** a pressure-reducing valve (207) is provided by means of which the maximum amount of the pressure injected into the hold-down devices (29) is limited to a value which is significantly lower than the highest operating pressure at which the fixed-displacement pump (63) operates, but significantly higher than the maximum pressure to which the pressure accumulator (88) can be charged.

16. Sheet-metal shearing machine according to any one of Claims 1 to 5, **characterized by** the following features:

a) the accumulator charging valve arrangement (131) comprises a changeover valve (132), designed as a pressure-controlled 2/2-way valve, which, as a charging position, has a blocking initial position (0) in which the pressure output of the fixed-displacement pump (63) is closed against the unpressurized reservoir and the accumulator (88) can be charged via the output check valve (108) of the pressure supply unit (62) and the charging flow path which is released when the main control valve piston (76) is in the middle position range, and, as a switching position (I), a flow position in which the pressure output (109) of the fixed-displacement pump (63) is connected to the unpressurized reservoir (66) ;

b) the pressure output (109) of the fixed-displacement pump (63) is both connected, via a choke (137), to a first control chamber (134) of the changeover valve (132), as a result of whose pressurization there is produced a force, acting in the same direction as the bias of the valve spring (133) of the changeover valve (132), which forces the changeover valve (132) into its initial position, and connected to a second control chamber (138) of the changeover valve (132), as a result of whose pressurization a force is produced which forces the piston of the changeover valve (132) into the flow position (I);

c) the magnitude $f_1$ of an end surface of the valve piston forming the axially movable delimitation of the first control chamber (134) is significantly greater than the magnitude $f_2$ of an end surface of the valve piston forming the axially movable delimitation of the second control chamber (138), the ratio $f_1/f_2$ having a typical value of about 1.4;

d) provided as a pilot valve for the changeover valve (132) is a pressure valve (141) which, if the accumulator pressure exceeds its upper limiting value, comes into a flow position which connects the first control chamber (134) of the changeover valve to a relieving control path (142), and only falls back into its blocking initial position when the accumulator pressure falls below a lower limiting value which is below and different from the upper limiting value;

e) the relieving control path can be released and blocked by means of an auxiliary valve (143) whose piston has blocking position ranges (I) and (II) respectively on both sides of a middle position range within which the relieving flow path (142) is connected to the unpressurized reservoir (66);

f) the stroke movements of the pistons (76 and 143' respectively) of the main control valve (73) and auxiliary valve (143) are positively coupled such that the auxiliary valve (143) only effects communication between the relieving control path (142) and the reservoir (66) if the piston (76) of the main control valve (73) also assumes a position within its middle stroke range suitable for an accumulator charging.

17. Sheet-metal shearing machine according to Claim 16, **characterized in that** the auxiliary valve (143) is integrated into the main control valve.

18. Sheet-metal shearing machine according to Claim 17, **characterized by** the following features:

a) there is provided, within the end portion $(116_5)$ of the axially continuous valve bore (116) extending between an accumulator annular space (111) of the middle housing block (81), which is in permanent communication with the pressure accumulator (88), and the x control chamber (82) through which the plunger-type piston extension (94) passes, an $x_1$ annular groove (144), forming a portion of the relieving control path (142) and radially widening a middle region of the bore portion $(116_5)$, which communicates with an $x_1$ control connection of the main control valve (73);

b) the piston portion (93) which is displaceable, in a pressure-tight manner, in the bore end portion $(116_5)$ on both sides of the $x_1$ annular groove (144) is provided with a radial window opening (147) which communicates with a central axial bore (148) which ends within the piston portion (93) and otherwise passes through the piston (76), and which, in turn, communicates, in each possible position of the main control piston (76), with a connecting space (99) of the main control valve (73) which is permanently connected to the unpressurized reservoir (66);

c) the arrangement of the $x_1$ annular groove (144) in the bore end portion $(116_5)$ of the valve housing (77), the arrangement of the window opening (147) on the main control valve piston (76) and the inside widths of the $x_1$ annular groove (144) and the window opening (147), measured in the axial direction, are coordinated with one another such that, as viewed from each of the two end positions I and II of the piston (76), a minimum stroke of the piston (76) is required to bring the window opening (147) into communicating overlap with the $x_1$ annular groove (144).

19. Sheet-metal shearing machine according to any one of Claims 1 to 18, **characterized in that** a face-to-face changeover valve (209) is provided, designed as a pressure-controlled valve or as a valve which can be electrically driven in dependence on sensed values of the pressure, which, if a threshold value $p_{us}$ of the operating pressure injected into the head-side drive pressure space (49) of the larger hydraulic drive cylinder (27) is exceeded, comes out of an initial position (0), in which the rod-side drive pressure space (53) of the smaller hydraulic drive cylinder (28) is connected to the p supply connection (107) of the main control valve (73), into its switching position (I) in which the rod-side drive pressure space (53) of the smaller hydraulic drive cylinder (28) is connected to the unpressurized reservoir (66), and is switched back into its initial position (0) if the pressure prevailing in the head-side drive pressure space (49) of the larger drive cylinder (27) falls below a threshold value $p_R$ which is given by the relationship

$$P_R = P_{us} \cdot \left( \frac{F_1 - F_3}{F_1} - a \right)$$

in which $F_3$ denotes the annular surface of the piston (43) of the smaller hydraulic drive cylinder (28) subjected to the pressure in the rod-side drive pressure space (53) of the said smaller hydraulic drive cylinder, $F_1$ denotes the circular surface of the piston (42) of the larger drive cylinder (27) subjected to the pressure in the head-side drive pressure space (49) of the said larger drive cylinder, and a denotes a constant which preferably has a value of about 0.1.

20. Sheet-metal shearing machine according to any one of Claims 1 to 19, **characterized in that** the pilot valve (83) is designed as a 3-position valve which, in addition to the initial position (0) assigned to the return operation of the upper blade (17) and the switching position (I) assigned to the advance and cutting operation, has a second switching position (II), which can be set through excitation of a control magnet of the pilot valve (83) in which the power supply connection (127) of the pilot valve (83) is connected, via a flow path (227), to the second control connection (203) of the pilot valve (83) which is connected, via a choke restrictor (202), to the unpressurized reservoir (66), and in which the x control output (126) of the pilot valve (83) is connected, via a flow path (226) of the pilot valve (83), to the T return connection (208) of the latter.

21. Sheet-metal shearing machine according to any one of Claims 1 to 20, **characterized in that** the electro-hydraulic control unit (72) comprises a regulating valve arrangement (228, 234) by means of which, while the main control valve (73) assumes its copy position, the smaller hydraulic drive cylinder (28) can be driven to regulating movements for the setting of the cutting angle α of the upper blade (17).

## Revendications

1. Cisaille à tôles (10) pour grandes longueurs de coupe avec une lame supérieure (17) montante et descendante en face d'une lame inférieure (14) montée de façon fixe sur une table à cisaille (13), pour l'entraînement de coupe et de retour de cette lame supérieure sont prévus deux cylindres linéaires hydrauliques (27, 28) à double effet, couplés en série de façon hydraulique, conçus comme des vérins différentiels, dont les pistons (42, 43) ont des tiges (44, 46) ressortant d'un côté vers le bas hors des cylindres, tiges auxquelles la lame supérieure pour le réglage d'un petit angle de coupe de maximum 3° est logée de façon pivotante autour des axes (58, 59) s'étendant à angle droit par rapport aux arêtes de coupe de la lame, où les pistons et les tiges de piston des deux cylindres hydrauliques d'entraînement ont des diamètres différents, qui sont adaptés l'un à l'autre de façon à ce que la surface de piston côté sol (68) du plus petit cylindre hydraulique d'entraînement (28) corresponde à la surface de piston (67) de forme circulaire côté tige du cylindre différentiel de plus grand diamètre (27) et que les forces d'avancée déployées aux deux cylindres différentiels aient respectivement les mêmes valeurs ainsi pour que les proportions de charge de poids soient répartis uniformément sur les deux cylindres, pour la commande d'entraînement desquels est prévue dans leurs sens de mouvements alternatifs d'avancée et de retour une soupape de commande principale (73) pilotée par pression au moyen d'une vanne de pilotage (83) commandée par électricité, soupape de commande principale qui ouvre en positions de fonction alternatives la combinaison de voies de circulation nécessaire à chaque sens de mouvement piloté, par laquelle s'effectue le passage de pression d'un agrégat d'alimentation en pression (62) comprenant en tant que source de pression une pompe à cylindrée constante (63) vers l'un des cylindres hydrauliques et le refoulement de pression hors de l'autre cylindre, ainsi qu'avec un dispositif serre-flans (29) hydraulique au moyen duquel la pièce de tôle à usiner (11) est calée pendant le processus de coupe à la table à cisaille, **caractérisée par** les aspects suivants :

   a) Comme source de pression pour le positionnement des serre-flans (29) à la bande de tôle (11) est prévu un accumulateur (88), qui est au moins rechargeable dans une phase de pause de la lame supérieure (17) ;

b) La soupape de commande principale (73) est conçue comme vanne à tiroir, dont le piston (76) a deux zones de coup de levée $\Delta h_1$ et $\Delta h_2$ raccordées l'une à l'autre par une position médiane (0), qui sont affectées aux positions de fonctions (II et I) de la soupape de commande principale (73), où dans l'une des positions est donnée la configuration des voies pour le fonctionnement d'avancée et de coupe de la lame supérieure (17) et dans l'autre la configuration des voies pour le fonctionnement de retour de la lame supérieure ;

c) Il est prévu un guide de copiage 128) exécutant les mouvements de retour et d'avancée de la lame supérieure (17), qui copie grâce à sa place située à un prolongement de piston (94) et ainsi grâce à l'entraînement mécanique du piston (76) qui s'ensuit, la position d'inversion de sens (point mort haut) de la lame supérieure (17) éloignée de la bande de tôle (11) sur la position médiane de la soupape de commande principale (73) ;

d) En position de copiage de piston (76) ainsi qu'à l'intérieur d'une zone de coup de levée s'étendant des deux côtés d'une position médiane (0), zone qui est plus petite que le coup de levée entier ($\Delta h_1 + \Delta h_2$) du piston (76), existe une relation communicante entre une zone de soupape (106), dans laquelle la pression de sortie de la pompe à cylindrée constante (63) est injectée, et l'accumulateur de pression (88) ;

e) Il est prévu un dispositif de soupape servant au chargement de l'accumulateur (131) piloté par pression, dispositif qui commute après le cycle de chargement de l'accumulateur de pression (88) la pompe à cylindrée constante (63) de l'agrégat d'alimentation en pression (62) en fonctionnement de rotation ;

f) Une unité de commande électro-hydraulique (72) est prévue, qui permet d'abord de positionner les serre-flans (29) pendant le cours du cycle de coupe, avant que la soupape de commande principale (73) entre dans la position de fonction (II) affectée au fonctionnement d'avancée et de coupe.

2. Cisaille à tôles selon revendication 1, **caractérisée en ce que** la soupape de commande principale (73) est pilotable par la pressurisation d'une surface de commande (92) d'un montant Fs de son piston (76) contre une force résultant d'une pressurisation d'une surface de pression (97) d'une valeur inférieure d'un montant $F_G$ du piston (76) avec la pression de sortie de l'accumulateur (88) en position de fonction (II) affectée au fonctionnement de coupe et d'avancée et grâce à la dépressurisation de la plus grande surface de commande (92) en position de fonction (I) affectée au fonctionnement de retour de la lame supérieure (17).

3. Cisaille à tôles selon revendication 2, **caractérisée en ce que** le rapport de surfaces $F_S/F_G$ de la plus grande surface de commande (92) par rapport à la plus petite surface de commande (97) s'élève entre 1,8 et 2,5, de préférence à 2.

4. Cisaille à tôles selon revendication 2 ou revendication 3, **caractérisée en ce que** la plus grande surface de commande (92) du montant $F_S$ est conçue comme une surface annulaire, par laquelle un segment final de piston (93) qu'on peut déplacer de façon étanche à la pression dans un segment final inférieur ($116_5$) d'un alésage (116) traversant sur un axe d'un bloc de corps médian (81) du corps de soupape (77) est déposée contre un prolongement de piston (94) en forme de poussoir et au diamètre plus petit, prolongement qui de son côté perce dans un orifice alésé (96) coaxial avec l'alésage de soupape (116) d'une partie constituant la fermeture du corps (78) montée au bloc de corps médian (81), hors de cet alésage avec un segment final libre, dont la face finale (129) forme la surface de contact pour le guide de copiage (128), où la chambre de commande (82) traversée sur son axe par le prolongement de piston (94) en forme de poussoir et ayant une limite de corps formée par la partie constituant la fermeture du corps (78) et le bloc médian de corps (81) est en relation communicante avec le raccord-x de commande (86) de la soupape de commande principale (73).

5. Cisaille à tôles selon revendication 4, **caractérisée en ce que** la plus petite surface de commande (97) d'un montant $F_G$ correspond à la surface transversale d'un taquet de manoeuvre (89) soutenu de façon axiale au piston (76) de la soupape de commande principale (73) ou lié de façon fixe à celui-ci, taquet qui est placé à l'extrémité du piston (76) qui se détourne du prolongement de piston (94) à l'extrémité libre et qu'on peut déplacer de façon étanche à la pression dans un alésage coaxial avec l'alésage de soupape (116) du bloc médian de corps (81), alésage d'une partie "supérieure" supplémentaire constituant la fermeture du corps (79) fixée contre ce bloc de corps, alésage qui débouche dans une chambre "supérieure" de commande (87) limitée de corps par cette partie constituant la fermeture du corps (79), chambre dans laquelle est injectée la pression $p_S$ dominant dans l'accumulateur(88) pendant que la cisaille (10) est en service.

6. Cisaille à tôles selon une des revendications 1 à 5, **caractérisée en ce que** la soupape de commande principale (73) est montée à la table à cisaille (13) avec son axe longitudinal central (74) passant parallèlement aux axes longitudinaux (39, 41) des cylindres hydrauliques d'entraînement (28, 29) et **en ce que** le guide de copiage (128) est relié fixement au piston (42) du plus grand cylindre hydraulique d'entraînement (27).

**7.** Cisaille à tôles selon une des revendications 2 à 6, **caractérisée par** les aspects suivants :

a) En position initiale 0 de la vanne de pilotage (83) affectée au fonctionnement de retour de la lame supérieure (17) ainsi qu'au fonctionnement de chargement de l'accumulateur, un raccord d'alimentation en pression (127) est fermé à la sortie-x de commande (126) de la vanne de pilotage (83), sortie par laquelle s'effectue la pressurisation de la plus grande surface (92) du piston de soupape de commande principale (76) ainsi que sa dépressurisation, surface restant cependant en relation communicante avec le réservoir de stockage hors pression (66) de l'agrégat d'alimentation en pression ;
b) En position de commutation (I) de la vanne de pilotage (83) affectée au fonctionnement d'avancée et de coupe de la lame supérieure (17), le raccord d'alimentation en pression (127) est relié à la sortie-x de commande (126) de la vanne de pilotage (83), sortie qui reste fermée au réservoir de stockage (66) ;
c) Selon la pression la plus haute, est injectée dans les serre-flans (29) soit la pression dominant momentanément dans l'accumulateur (88), soit une pression acheminée par une vanne de non-retour de sortie (108) et un diaphragme (189) de la sortie de la pompe (109) vers le raccord-p d'alimentation (127) de la vanne de pilotage (83).

**8.** Cisaille à tôles selon revendication 7, **caractérisée en ce qu'**un diaphragme (168) et/ou un élément de commutation pilotable (84) est prévu, au moyen duquel on retarde l'augmentation de la pression $p_S$, avec laquelle la plus grande surface de commande (92) du piston de soupape de commande principale (76) est pressurisée, par rapport à l'augmentation de la pression dominant à la sortie-x de commande (126) et injectée dans les serre-flans (29).

**9.** Cisaille à tôles selon revendication 8, **caractérisée en ce que** l'élément de commutation (84) est conçu comme vanne magnétique à pilotage électrique, qui en position initiale (0) relie le raccord-x (86) de la soupape de commande principale (73), par lequel la surface de commande (92) est pressurisée avec une pression de commande ps, au réservoir de stockage hors pression (66) et en position de commutation (I) déclenchée par commande électrique, la sortie-x de commande (126) de la vanne de pilotage (83) au raccord-x de commande (86) de la soupape de commande principale (73).

**10.** Cisaille à tôles selon une des revendications 7 à 9, **caractérisée en ce qu'**entre l'accumulateur de pression (88) et les zones de pression d'entraînement (34) des serre-flans (29) une vanne d'entrée (167) est montée, qui a une position initiale de blocage et entre en même temps ou directement après le passage de la vanne de pilotage dans cette position (I) dans une position de commutation, dans laquelle est ouverte une voie d'écoulement reliant l'accumulateur (88) de grande coupe transversale d'écoulement avec les serre-flans (29) et aussitôt que dans les serre-flans (29) la pression nécessaire à la force de soutien minimale est atteinte, se remet en position initiale de blocage.

**11.** Cisaille à tôles selon revendication 10, **caractérisée par** les aspects suivants :

a) La vanne d'entrée (167) est conçue comme vanne à 2/2 voies pilotée par pression avec une position initiale de blocage (ressort centré), dans laquelle l'accumulateur de pression (88) est fermé par rapport aux serre-flans (29) et avec une position de commutation ouverte, dans laquelle l'accumulateur de pression (88) est relié aux zones de pression d'entraînement (34) des serre-flans (29) ;
b) Grâce au piston (171) de la vanne d'entrée (167), une première chambre de commande (186), qui est tenue en relation communicante avec l'accumulateur (88) est limitée de façon mobile sur un axe à une deuxième chambre de commande (187), chambre qui est exposée à la pression dominant au raccord-p d'alimentation (127) de la vahne de pilotage (83) ;
c) Le piston (171) de la vanne d'entrée (167) est conçu comme piston à gradins, dont le gradin de plus petit diamètre (182) forme la limite mobile sur un axe de la chambre de commande (186) côté accumulateur ;
d) Le raccord-p d'alimentation en pression (127) de la vanne de pilotage (83) est relié par une vanne de non-retour d'admission (188) et un diaphragme (189) à une voie d'huile sous pression (191) allant de l'agrégat d'alimentation en pression (62) vers le raccord-p d'alimentation (107) de la soupape de commande principale (73).

**12.** Cisaille à tôles selon une des revendications 7 à 11, **caractérisée en ce qu'**une vanne d'échappement (164) est montée entre les serre-flans (29) et le réservoir de stockage hors pression (66) de l'agrégat d'alimentation en pression (62), vanne qui a une position initiale de blocage et avec ou directement après la commutation de la vanne de pilotage (83) dans sa position initiale (0) affectée au fonctionnement de retour de la lame supérieure (17) entre en position de commutation, dans laquelle les zones de pression d'entraînement (34) des serre-flans (29) sont reliées par une voie d'écoulement de grande coupe transversale au réservoir de stockage (66) de l'agrégat d'alimentation en pression (62).

13. Cisaille à tôles selon revendication 12, **caractérisée en ce que** la vanne d'échappement (164) est conçue comme vanne pilotée par pression, grâce au piston (171') de laquelle une première chambre de commande (186'), qui est tenue en relation communicante avec les zones de pression d'entraînement (34) des serre-flans (29), est bornée par une deuxième chambre de commande (187'), qui est reliée à la sortie-x de commande (126) de la vanne de pilotage (83), où la force résultant de la pression injectée dans la deuxième chambre de commande (187') pousse le piston (171') dans sa position initiale et **caractérisée en ce que** le piston (171') est conçu comme piston à gradins, dont le gradin de plus petit diamètre forme la limite mobile sur un axe de la chambre de commande (186') reliée aux serre-flans (29).

14. Cisaille à tôles selon revendication 13, **caractérisée en ce que** le piston (171') de la vanne d'échappement (164) est pourvu d'un diaphragme (198), par lequel les deux chambres de commande (186' et 187') de la vanne d'échappement (164) sont tenues en relation communicante.

15. Cisaille à tôles selon une des revendications 7 à 14, **caractérisée en ce qu'**une vanne réductrice (207) est prévue, au moyen de laquelle la valeur maximale de la pression injectée dans les serre-flans (29) est limitée à une valeur, qui est de façon significative plus basse que la pression de service la plus élevée, avec laquelle la pompe à cylindrée constante (63) fonctionne, et cependant plus élevée que la pression maximale, à laquelle l'accumulateur (88) est rechargeable.

16. Cisaille à tôles selon une des revendications 1 à 15, **caractérisée par** les aspects suivants :

a) Le dispositif de soupape servant au chargement de l'accumulateur (131) comprend une vanne d'inversion (132) conçue comme une vanne à 2/2 voies pilotée par pression, qui a comme position de chargement une position initiale de blocage (0), dans laquelle la sortie de pression de la pompe à cylindrée constante (63) est fermée par rapport au réservoir de stockage hors pression et l'accumulateur (88) est rechargeable par la vanne de non-retour de sortie (108) de l'agrégat d'alimentation en pression (62) et par la voie d'écoulement de chargement ouverte quand le piston de la soupape de commande principale (76) est dans la zone de position médiane et qui comme position de commutation (I) une position de circulation, dans laquelle la sortie de pression (109) de la pompe à cylindrée constante (63) est reliée au réservoir de stockage hors pression (66) ;

b) La sortie de pression (109) de la pompe à cylindrée constante (63) est d'une part reliée par un diaphragme (137) à une première chambre de commande (134) de la vanne d'inversion (132), de la pressurisation de cette chambre résulte une force agissant de même sens avec la pré-tension du ressort (133) de la vanne d'inversion (132) poussant la vanne d'inversion dans sa position initiale et d'autre part reliée à une deuxième chambre de commande (138) de la vanne d'inversion (132), de la pressurisation de laquelle résulte une force poussant le piston de la vanne d'inversion (132) dans sa position de circulation (I);

c) La valeur $f_1$ de la face de piston de vanne formant la limite mobile sur un axe de la première chambre de commande (134) est significativement plus grande que la valeur $f_2$ d'une face de piston de vanne formant la limite mobile sur un axe de la deuxième chambre de commande (138), où le rapport $f_1/f_2$ a une valeur typique de 1,4 ;

d) Comme vanne de prépilotage pour la vanne d'inversion (132) est prévue une vanne de pression (141), qui entre en position de circulation reliant la première chambre de commande (134) de la vanne d'inversion avec la voie de commande de déchargement (142), quand la pression de l'accumulateur dépasse sa valeur seuil supérieure et rentre en position initiale de blocage seulement quand la pression de l'accumulateur passe en dessous d'une valeur seuil inférieure plus basse et différente de la valeur seuil supérieure ;

e) La voie de commande de déchargement peut être ouverte ou fermée au moyen d'une vanne auxiliaire (143), dont le piston est relié des deux côtés d'une zone de position médiane, à l'intérieur de la voie d'écoulement de déchargement (142) de celle-ci au réservoir de stockage hors pression (66), a des zones de positions de blocage (I) et (II);

f) Les mouvements de levée du piston (76 et 143') de la soupape de commande principale (73) et de la vanne auxiliaire (143) sont couplés de façon mécanique d'une telle façon que la vanne auxiliaire (143) ne permet une relation communicante de la voie de commande de déchargement (142) avec le réservoir de stockage (66) que lorsque le piston (76) de la soupape de commande principale (73) prend une position à l'intérieur de sa zone de levée médiane adaptée à un chargement de l'accumulateur.

**17.** Cisaille à tôles selon revendication 16, **caractérisée en ce que** la vanne auxiliaire (143) est intégrée dans la soupape de commande principale.

**18.** Cisaille à tôles selon revendication 17, **caractérisée par** les aspects suivants :

a) A l'intérieur du segment final ($116_5$) de l'alésage de soupape (116) traversant sur un axe, qui s'étend entre une zone annulaire d'accumulateur (111) du bloc de corps médian (81) étant en permanence en communication communicante avec l'accumulateur (88) et la chambre-x de commande (82) traversée par le prolongement de piston (94) en forme de coulisseau, est prévue une gorge-$x_1$ de retenue formant un segment de la voie de commande de déchargement (142), élargissant de façon radiale une zone médiane du segment d'alésage ($116_5$), gorge qui est en relation communicante avec la raccord-$x_1$ de commande de la soupape de commande principale (73) ;

b) Le segment de piston (93) qui se déplace de façon étanche à la pression des deux côtés de la gorge-$x_1$ de retenue (144) dans le segment final d'alésage ($116_5$) est pourvu d'une fenêtre radiale (147), qui est en relation communicante avec un alésage axial central (148) se terminant à l'intérieur du segment de piston (93), traversant du reste le piston (76), alésage qui de son côté est en relation communicante dans chaque position possible du piston de soupape de commande principale (76) avec une zone de raccord (99) de la soupape de commande principale (73), qui est en relation permanente avec le réservoir de stockage hors pression (66) ;

c) La disposition de la gorge-$x_1$ de retenue (144) dans le segment final d'alésage ($116_5$) du corps de soupape (77), la disposition de la fenêtre (147) au piston de soupape de commande principale (76) ainsi que la largeur intérieure mesurée de façon axiale de la gorge-$x_1$ de retenue (144) et de la fenêtre (147) sont adaptées les unes aux autres de façon à ce que, vu de chaque côté des deux positions finales I et II du piston (76), un coup de levée minimum du piston (76) est nécessaire pour amener la fenêtre (147) en recouvrement communicant avec la gorge-$x_1$ de retenue (144).

**19.** Cisaille à tôles selon une des revendications 1 à 18, **caractérisée en ce qu'**une vanne d'inversion de surfaces (209) est prévue, qui est conçue comme vanne pilotée par pression ou vanne à pilotage électrique dépendant des valeurs captées de la pression, qui lors du dépassement d'une valeur seuil $p_{US}$ de la pression de service injectée dans la zone de pression d'entraînement (49) côté sol du plus grand cylindre hydraulique (27) sort de sa position initiale (0), dans laquelle la zone de pression (53) côté tige du plus petit cylindre hydraulique (28) est reliée au raccord-p d'alimentation (107) de la soupape de commande principale (73), et entre en position de commutation I, dans laquelle la zone de pression (53) côté tige du plus petit cylindre hydraulique (28) est reliée au réservoir de stockage hors pression (66) et retourne en position initiale (0), lorsque la pression dominant dans la zone de pression (49) côté sol du plus grand cylindre hydraulique (27) passe en dessous d'une valeur seuil $P_R$, qui est donnée par le rapport,

$$P_R = P_{us}\left( \frac{F_1 - F_3}{F_1} - a \right)$$

dans lequel est définie par $F_3$ la zone annulaire du piston (43) exposée à la pression dans la zone de pression (53) du plus petit cylindre hydraulique (28), par $F_1$ la surface circulaire du piston (42) exposée à la pression dominant dans la zone de pression (49) côté sol du plus grand cylindre hydraulique (27) et par $a$ une constante, qui a de préférence une valeur de 0,1.

**20.** Cisaille à tôles selon une des revendications 1 à 19, **caractérisée en ce que** la vanne de pilotage (83) est conçue comme vanne à 3 positions, qui en plus de la position initiale (0) affectée au retour de la lame supérieure (17) et de la position de commutation (I) affectée au mouvement d'avancée et de coupe a une deuxième position de commutation (II) déclenchée par l'excitation d'un aimant de commande de la vanne de pilotage (83), position dans laquelle le raccord d'alimentation en pression (127) de la vanne de pilotage (83) est relié par une voie d'écoulement (227) au deuxième raccord de commande (203) de la vanne de pilotage (83), raccord qui est relié par un diaphragme (202) au réservoir de stockage hors pression (66) et position dans laquelle la sortie-x de commande (126) de la vanne de pilotage (83) est reliée par une voie d'écoulement (226) de la vanne de pilotage (83) à son raccord-T de retour (208).

**21.** Cisaille à tôles selon une des revendications 1 à 20, **caractérisée en ce que** l'unité de commande électro-hydraulique (72) comprend un dispositif de vanne de réglage (228, 234), au moyen duquel le plus petit cylindre hydraulique (28), pendant que la soupape de commande principale (73) prend sa position de copiage, peut être commandé à exécuter des mouvements de réglages pour régler l'angle de coupe $\alpha$ de la lame supérieure (17).

Fig. 1a

Fig. 1b

Fig. 2

Fig. 3a (I)

Fig. 3b (O)

Fig. 3c (II)

Fig. 4

Fig. 5b

Fig. 5a